(19) Europäisches Patentamt / European Patent Office / Office européen des brevets

(11) EP 1 733 784 B1

(12) **EUROPEAN PATENT SPECIFICATION**

(45) Date of publication and mention of the grant of the patent:
**18.01.2012 Bulletin 2012/03**

(21) Application number: **05727039.9**

(22) Date of filing: **22.03.2005**

(51) Int Cl.:
***B01D 71/44*** *(2006.01)*
***A61M 1/18*** *(2006.01)*
***B01D 65/10*** *(2006.01)*
***B01D 67/00*** *(2006.01)*
***B01D 69/08*** *(2006.01)*
***B01D 71/68*** *(2006.01)*
***D01F 6/76*** *(2006.01)*

(86) International application number:
**PCT/JP2005/005140**

(87) International publication number:
**WO 2005/089918 (29.09.2005 Gazette 2005/39)**

(54) **POLYSULFONE-BASE PERMSELECTIVE HOLLOW FIBER MEMBRANE BUNDLE AND PROCESS FOR PRODUCING THE SAME**

BÜNDEL VON PERMSELEKTIVEN HOHLFASERMEMBRANEN AUF POLYSULFONBASIS UND HERSTELLUNGSVERFAHREN DAFÜR

FAISCEAU DE MEMBRANES EN FIBRES CREUSES PERMSELECTIVES A BASE DE POLYSULFONE ET PROCEDE SERVANT A PRODUIRE CELUI-CI

(84) Designated Contracting States:
**AT BE BG CH CY CZ DE DK EE ES FI FR GB GR HU IE IS IT LI LT LU MC NL PL PT RO SE SI SK TR**

(30) Priority: **23.03.2004 JP 2004085799**

(43) Date of publication of application:
**20.12.2006 Bulletin 2006/51**

(73) Proprietor: **Toyo Boseki Kabushiki Kaisha**
**Osaka-shi,**
**Osaka 530-8230 (JP)**

(72) Inventors:
- **MABUCHI, Kimihiro; c/o TOYO BOSEKI KABUSHIKI**
**Otsu-shi, Shiga; 520-0243 (JP)**
- **YOKOTA, Hideyuki; c/o TOYO BOSEKI KABUSHIKI**
**Otsu-shi, Shiga; 520-0243 (JP)**
- **KUZE, Katsuaki; c/o TOYO BOSEKI KABUSHIKI**
**Otsu-shi, Shiga; 520-0243 (JP)**
- **TAMAMURA, Noriyuki; c/o TOYO BOSEKI KABUSHIKI**
**shi, Osaka; 5308230 (JP)**
- **ONO, Makoto; c/o TOYO BOSEKI KABUSHIKI KAISHA**
**Otsu-shi, Shiga; 520-0243 (JP)**
- **MONDEN, Noriko; c/o TOYO BOSEKI KABUSHIKI**
**Otsu-shi, Shiga; 520-0243 (JP)**
- **KATO, Noriaki; c/o TOYO BOSEKI KABUSHIKI**
**Otsu-shi, Shiga; 520-0243 (JP)**
- **SHIBANO, Hiroshi; c/o TOYO BOSEKI KABUSHIKI**
**shi, Osaka; 5308230 (JP)**
- **NOSE, Katsuhiko; c/o TOYO BOSEKI KABUSHIKI**
**shi, Osaka; 5308230 (JP)**

(74) Representative: **Vossius & Partner**
**Siebertstrasse 4**
**81675 München (DE)**

(56) References cited:
**EP-A- 0 927 572**
**EP-A- 0 997 182**
**JP-A- 11 309 355**
**JP-A- 2000 300 663**
**JP-A- 2003 284 931**
**US-A- 6 113 785**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 733 784 B1

## Description

### TECHNICAL FIELD

The present patent application has been filed claiming the priority of the Japanese Patent Application No. 2004-85799, the contents of which are incorporated herein by reference thereto in their entirety.
The present invention relates to a polysulfone permselective hollow fiber membrane bundle which is excellent in safety and reliability of performance, and is particularly suitable for use in a blood purifier or the like, and to a process for manufacturing the same and a blood purifier comprising the same.

### BACKGROUND ART

In the hemocathartic therapies for renal failures, etc., modules such as hemodialyzers, blood filters, hemodialytic filters, etc. are widely used to remove urine toxic substances and waste products from blood. Modules such as hemodialyzers, blood filters, hemodialytic filters, etc. are fabricated using, as separators, dialytic membranes or ultrafiltration membranes which are manufactured using natural materials such as cellulose or derivatives thereof (e.g., cellulose diacetate, cellulose triacetate, etc.) and synthesized polymers such as polysulfone, polymethyl methacrylate, polyacrylonitrile, etc. Particularly, modules using hollow fiber mebranes as separators are highly important in the field of hemodialyzers because of their advantages such as the reduction of in vitro circulation blood amounts, high efficiency of removing toxic and waste substances from blood, high module-fabricating productivity, etc.

Among the above membrane materials, polysulfone-based resins having high water permeability have attracted keen interests as the most suitable materials for the advance of dialytic technologies. However, semipermeable membranes formed of polysulfone-based resins alone are poor in affinity with blood and tend to cause air lock phenomena, since the polysulfone-based resins are hydrophobic. Therefore, such semipermeable membranes as they are can not be used to treat blood.

To solve the problem, there are proposed methods of imparting hydrophilicity to such membranes, by adding hydrophilic polymers to the polysulfone-based resins: for example, there are disclosed methods of blending polyhydric alcohols such as polyethylene glycol, etc. to the polysulfone-based resins (cf. Patent Literatures 1 and 2).

Patent Literature 1: JP-A-61-232860 (1986)
Patent Literature 2: JP-A-58-114702 (1983)

Other methods are disclosed in which poly(vinylpyrrolidone) is added to the polysulfone-based resin (cf. Patent Literatures 3 and 4).

Patent Literature 3: JP-B-5-54373 (1993)
Patent Literature 4: JP-B-6-75667 (1994)

Particularly, the latter method using poly(vinylpyrrolidone) has attracted keen interests in view of safety and cost, and the above-discussed problems can be solved by this method. However, the hydrophilicity-imparting technique by adding poly(vinylpyrrolidone) has a problem in that poly(vinylpyrrolidone) elutes from membranes and contaminates the purified blood during a hemodialysis. When the amount of eluting poly(vinylpyrrolidone) becomes larger, the amount of poly(vinylpyrrolidone), as foreign materials to the organisms, accumulated in vivo becomes larger over a long period of hemodialysis, which is likely to induce side effects or complications. To solve such disadvantages, the amount of eluting poly(vinylpyrrolidone) is regulated in the Approval Standard for Dialysis-type Artificial Kidney Apparatus, and is determined by UV absorbance according to these standards. In the meantime, a technique for evaluating the eluation amount-controlling effect based on these standards is disclosed (cf. Patent Literatures 5 to 7).

Patent Literature 5: Japanese Patent No. 3314861
Patent Literature 6: JP-A-6-165926 (1994)
Patent Literature 7: JP-A-2000-350926 (2000)

Further, Patent Literature 8 discloses a semipermeable membrane for treating blood, and the amount of a hydrophilic polymer eluting from such a semipermeable membrane is 10 ppm or less. This literature discloses a method of inhibiting a hydrophilic polymer from eluting from the semipermeable membrane for treating blood, but does not refer to the influence of hydrogen peroxide on the deterioration and decomposition of a hydrophilic polymer with time, and further on the storage of hollow fiber membranes.

Patent Literature 8: JP-A-2001-170171 (2001)

The methods of reducing the amounts of poly(vinylpyrrolidone) which elute from the membranes, by crosslinking the poly(vinylpyrrolidone) are disclosed in Patent Literatures 7 and 8. However, these Literatures do not pay any attention to the presence of hydrogen peroxide in a permselective membrane or the influence of hydrogen peroxide during a crosslinking treatment.
Similarly, Patent Literatures 9 to 19 do not pay any attention to the storage stability of selectively separation membranes, although refer to the inhibition of poly(vinylpyrrolidone) from eluting from membranes.

Patent Literature 9: JP-A-6-339620 (1994)
Patent Literature 10: JP-A-9-70524 (1997)
Patent Literature 11: JP-A-9-70525 (1997)
Patent Literature 12: JP-A-9-70526 (1997)
Patent Literature 13: JP-A-9-103664 (1997)
Patent Literature 14: JP-A-10-66864 (1998)
Patent Literature 15: JP-A-10-230148 (1998)
Patent Literature 16: JP-A-2001-170167 (2001)
Patent Literature 17: JP-A-2003-201383 (2001)
Patent Literature 18: JP-A-2003-245526 (2003)
Patent Literature 19: Japanese Patent No. 3474205

In the meantime, there are disclosed the methods of drying hollow fiber membranes by irradiating the same with microwaves, wherein the irradiation outputs of microwaves are decreased at points of time when the average moisture contents have reached 20 to 70 mass % (cf. Patent Literatures 20 to 22). In any of these Literatures, the hollow fiber membranes are dried by firstly irradiation with microwaves having an output of 30 kW, followed by irradiation with microwaves having an output of about 21 kW, but a method of drying hollow fiber membranes by irradiation with microwaves under reduced pressure is not referred to. The use of a conventional drying step in combination with drying by irradiation with microwaves is also disclosed, but the use of microwaves in combination with reduced pressure for drying hollow fiber membranes is not disclosed.
Furthermore, any of these Literatures pays no attention to the generation of hydrogen peroxide during the drying of hollow fiber membranes or to the storage stability of dried hollow fiber membranes.

Patent Literature 17: JP-A-2003-175320 (2003)
Patent Literature 18: JP-A-2003-175321 (2003)
Patent Literature 19: JP-A-2003-175322 (2003)
Patent Literature 20: JP-A-2003-175320 (2003)
Patent Literature 21: JP-A-2003-175321 (2003)
Patent Literature 22: JP-A-2003-175322 (2003)

## DISCLOSURE OF THE INVENTION

### PROBLEMS TO BE SOLVED BY THE INVENTION

The present inventors have carefully researched the eluting behaviors of poly(vinylpyrrolidone), and have discovered that hydrogen peroxide impossible to measure by a known UV absorbance method is contained in an eluate obtained by a test method regulated in the Approval Standard for Dialysis-type Artificial Kidney Apparatus. When hydrogen peroxide is present in a blood purifier or permselective separation membranes, the deterioration of poly(vinylpyrrolidone) due to the oxidation thereof is accelerated, and the storage stability of hollow fiber membranes becomes poor since the amount of eluting poly(vinylpyrrolidone) tends to increase while the hollow fiber membranes are being stored.

In any of the methods disclosed in Patent Literatures 5 to 7, the evaluation of permselective separation membranes is made at specified sites of the membranes. However, it is found that the evaluation of the membranes at such specified sites alone can not meet a demand for high safety of hollow fiber membranes, because the amount of eluting poly(vinylpyrrolidone) largely changes in association with the influence of variation in drying conditions, while the hollow fiber membranes are being dried in the course of the fabrication of a module using the same. If hydrogen peroxide is present at such a specified site of a permselective separation membrane, the deterioration reaction thereof starts from such a site, and this reaction transmits over a whole of the permselective separation membrane. From this fact, the present inventors elucidated that the content of hydrogen peroxide in permselective separation membranes for use as a module should be maintained at a given amount or less alongside the overall lengthwise direction thereof.

Therefore, objects of the present invention are to provide a polysulfone permselective hollow fiber membrane bundle suitable for use in a blood purifier which is required to have high safety, high reliability in performance and high water permeability for use in treatment of chronic renal failure, to provide a process for manufacturing the same, and to provide a blood purifier which keeps high stability over a long period of storage thereof.

MEANS FOR SOLVING THE PROBLEMS

The present invention relates to a polysulfone permselective hollow fiber membrane bundle which contains poly(vinylpyrrolidone), and particularly to a polysulfone permselective hollow fiber membrane bundle which shows a hydrogen peroxide-eluting amount of 5 ppm or less therefrom, when subjected to an eluation test regulated in the Approval Standard for Dialysis-type Artificial Kidney Apparatus.
Also, the present invention pertains to a polysulfone permselective hollow fiber membrane bundle, which shows a hydrogen peroxide concentration of 5 ppm or less in every one of eluates from 10 portions into which the hollow fiber membrane bundle is divided in the lengthwise direction, when each of such portions is subjected to an eluation test regulated in the Approval Standard for Dialysis-type Artificial Kidney Apparatus.
Further, the present invention relates to a polysulfone permselective hollow fiber membrane bundle, which shows a poly (vinylpyrrolidone)-eluting amount of 10 ppm or less therefrom, when subjected to an eluation test regulated in the Approval Standard for Dialysis-type Artificial Kidney Apparatus.
Furthermore, the present invention relates to a process for manufacturing a polysulfone permselective hollow fiber membrane bundle, which includes a step of spinning a solution containing a polysulfone polymer, poly(vinylpyrrolidone) and a solvent, wherein the content of hydrogen peroxide in the poly(vinylpyrrolidone) is 300 ppm or less.

EFFECT OF THE INVENTION

A polysulfone permselective hollow fiber membrane bundle according to the present invention is reduced in the amount of hydrogen peroxide eluting therefrom, and is inhibited in the deterioration of poly(vinylpyrrolidone) therein which is induced by the hydrogen peroxide, when stored over a long period of time. Accordingly, the maximum of UV absorbance of the hollow fiber membrane bundle (at a wavelength of 220 to 350 nm) according to the Approval Standard for Dialysis-type Artificial Kidney Apparatus can be maintained at 0.10 or less, even when the hollow fiber membrane bundle is stored over a long period of time. For this reason, the polysulfone permselective hollow fiber membrane bundle of the present invention is suitably used in a blood purifier or the like which should have high water permeability for use in treatment of chronic renal failure.
Further, the manufacturing process of the present invention makes it possible to reliably provide the above hollow fiber membrane bundle at lower cost.
Furthermore, the blood purifier of the present invention is reduced in the amount of hydrogen peroxide eluting from the polysulfone permselective hollow fiber membrane bundle packed therein, and is inhibited in the deterioration of poly (vinylpyrrolidone) in the hollow fiber membrane bundle, which is induced by the hydrogen peroxide, when stored over a long period of time. Accordingly, the maximum of UV absorbance of the blood purifier (at a wavelength of 220 to 350 nm) according to the Approval Standard for Dialysis-type Artificial Kidney Apparatus can be maintained at 0.10 or less, even when the blood purifier is stored over a long period of time. Therefore, the safety of the blood purifier can be ensured over a long period of storage.

BRIEF DESCRIPTION OF THE DRAWINGS

Fig. 1 shows schematic graphs each indicating the amount of hydrogen peroxide eluting from each of 10 portions into which a hollow fiber membrane is regularly divided.
Fig. 2 shows a schematic graph indicating the variation of the quality in the hollow fiber membrane bundles.
Fig. 3 shows a schematic graph indicating a relationship between the hydrogen peroxide content of a hollow fiber membrane bundle and the UV absorbance thereof found after the storage thereof.

BEST MODES FOR CARRYING OUT THE INVENTION

A hollow fiber membrane bundle of the present invention comprises a polysulfone resin containing poly(vinylpyrrolidone). The term "polysulfone resin" referred to in the present invention is a collective name of resins having sulfone bonds, and there is no particular limit in selection thereof. For example, polysulfone resins and polyethersulfone resins which have repeating units of the following formulae are widely used as polysulfone-based resins and are com-

mercially available with ease:

[Chemical formula 1]

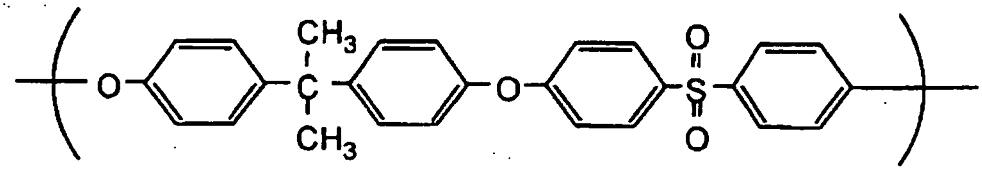

[Chemical formula 2]

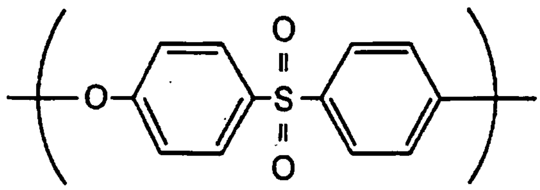

Poly(vinylpyrrolidone) used in the present invention is a water-soluble polymer which is obtained by vinyl-polymerizing N-vinylpyrrolidone and which is commercially available under the trade name of "Luvitec" from BASF, "Plasdone" from ISP, or "Pitzcol" from DAI-ICHI KOGYO SEIYAKU CO., LTD., and each of these products has a variety of molecular weights. It is preferable to use poly(vinylpyrrolidone) having a low molecular weight, in view of an efficiency of imparting hydrophilicity to membranes, while it is preferable to use poly(vinylryrrolicone) having a high molecular weight so as to decrease the eluting amount thereof. However, the kind of poly(vinylpyrrolidone) may be appropriately selected in accordance with the required properties of hollow fiber membranes as a final product. That is, the same kinds of poly(vinylpyrrolidone) having the same molecular weights may be used, or otherwise, two or more kinds of poly (vinylpyrrolidone) having different molecular weights may be used as a mixture. Further, a commercially available product may be purified for use as poly(vinylpyrrolidone) which has a sharpened molecular weight distribution.

Preferably, the hollow fiber membrane bundle of the present invention is manufactured using poly(vinylpyrrolidone) which contains hydrogen peroxide in an amount of 300 ppm or less, more preferably 250 ppm or less, still more preferably 200 ppm or less, far still more preferably 150 ppm or less. When poly(vinylpyrrolidone) as a raw material has a hydrogen peroxide content of 300 ppm or less, the amount of hydrogen peroxide eluting from the resultant hollow fiber membrane bundle can be easily maintained at 5 ppm or less, and this is preferable because the quality of the hollow fiber membrane bundle can be stabilized.

Hydrogen peroxide present in poly(vinylpyrrolidone) as a raw material triggers the deterioration of poly(vinylpyrrolidone) due to oxidation thereof, and hydrogen peroxide rapidly increases in amount, along with the proceeding of the oxidation deterioration of poly(vinylpyrrolidone). This is considered to accelerate the oxidation deterioration of poly (vinylpyrrolidone). Accordingly, to reduce the content of hydrogen peroxide to 300 ppm or less is the first means to inhibit the oxidation deterioration of poly(vinylpyrrolidone) in the course of the manufacturing of the permselective hollow fiber membrane bundle.

Another means to inhibit the deterioration of poly(vinylpyrrolidone) as a raw material during the transportation or storage thereof is also effective. For example, poly(vinylpyrrolidone) is enveloped in an aluminum foil laminate bag to thereby be shielded from light. Preferably, an inert gas such as a nitrogen gas or the like is further enveloped in the same bag, together with a deoxidant, when poly(vinylpyrrolidone) is stored. When the bag is opened to divide the poly(vinylpyrrolidone) in small portions, the weighing and charging of such portions are done under an atmosphere replaced with an inert gas, and preferably, such portions of poly(vinylpyrrolidone) are stored under the above-mentioned conditions.

It is preferably recommended to replace the inner atmospheres of supply tanks, etc. with an inert gas in a raw material-supply system, in the course of the manufacturing of the hollow fiber membrane bundle. Poly(vinylpyrrolidone) which is reduced in hydrogen peroxide content by the recrystallization method or the eluation method may also be used.

The process for manufacturing the permselective hollow fiber membrane bundle of the present invention is not limited. However, preferably, the hollow fiber membranes of the present invention are manufactured by, for example,

the process disclosed in JP-A-2000-300663. For example, polyethersulfone disclosed in this Literature (4800P manufactured by Sumitomo Chemical Company, Limited) (16 mass parts), poly(vinylpyrrolidone) (K-90 manufactured by BASF) (5 mass parts), dimethylacetoamide (74 mass parts) and water (5 mass parts) are mixed and dissolved in one another, and the resultant solution is degased for use as a membrane-forming solution, and a 50% aqueous dimethylacetoamide solution is used as a core solution. The membrane-forming solution and the core solution are concurrently extruded from the outer side and the inner side of a double tube orifice and are introduced into a coagulation water bath of 75°C through a free running section with a length of 50 cm, to thereby form a hollow fiber membrane in the bath. The hollow fiber membrane is then washed with water, wound up and dried at 60°C.

The ratio of the poly(vinylpyrrolidone) to the polysulfone polymer in the hollow fiber membrane is selected so that sufficient hydrophilicity and high water content can be imparted to the hollow fiber membrane. Preferably, the amount of the polysulfone polymer is from 99 to 80 mass %, and that of the poly(vinylpyrrolidone), from 1 to 20 mass %. When the ratio of poly(vinylpyrrolidone) to the polysulfone polymer is too small, the hydrophilicity-imparting effect to the hollow fiber membrane may be poor. Accordingly, the ratio of poly(vinylpyrrolidone) is more preferably 1.5 mass % or more, still more preferably 2.0 mass % or more, far still more preferably 2.5 mass % or more. On the other hand, when this ratio is too large, the hydrophilicity-imparting effect is saturated, and the amount(s) of poly(vinylpyrrolidone) and/or the oxidation-deteriorated material which elute(s) from the hollow fiber membrane tend(s) to increase, with the result that the amount of poly(vinylpyrrolidone) eluting from the hollow fiber membrane is likely to exceed 10 ppm. Accordingly, the ratio of poly(vinylpyrrolidone) is more preferably 18 mass % or less, still more preferably 15 mass % or less, far still more preferably 13 mass % or less, particularly 10 mass % or less.

In the present invention, preferably, the eluting amount of hydrogen peroxide is 5 ppm or less, and preferably, the amount of poly(vinylpyrrolidone) eluting from the hollow fiber membrane bundle is 10 ppm or less.

When the eluting amount of poly(vinylpyrrolidone) from the hollow fiber membrane bundle exceeds 10 ppm, the eluting poly(vinylpyrrolidone) is likely to cause side effects or complications in a patient over a long term of hemodialyses. The method for achieving this feature may be optionally selected without any limit. For example, the ratio of poly (vinylpyrrolidone) to the polysulfone polymer is selected from the above-mentioned range; or otherwise, the hollow fiber membrane-forming conditions are optimized. The amount of poly(vinylpyrrolidone) eluting from the hollow fiber membrane bundle is more preferably 8 ppm or less, still more preferably 6 ppm or less, far still more preferably 4 ppm or less.
The amount of poly(vinylpyrrolidone) eluting from the hollow fiber membrane bundle is determined by using an eluate which is obtained according to the eluation test method regulated in the Approval Standard for Dialysis-type Artificial Kidney Apparatus. In detail, some hollow fiber membranes (1.0 g) are optionally removed from a dried hollow fiber membrane bundle, and 100 ml of RO water is added to the hollow fiber membranes, followed by eluation therefrom at 70°C for one hour to obtain an eluate.
In this regard, the amount of eluting poly(vinylpyrrolidone) changes depending on a crosslinking treatment, and thus is determined after the crosslinking treatment, if it is needed. In some cases, the crosslinking treatment is carried out after the hollow fiber membrane bundle has been fabricated into a module. In such a case, the amount of eluting poly (vinylpyrrolidone) may be evaluated from the hollow fiber membrane bundle removed from the fabricated module.

As one of means to reduce the amount of eluting poly(vinylpyrrolidone), it is preferable to crosslink poly(vinylpyrrolidone) to thereby insolubilize it. For example, poly(vinylpyrrolidone) is crosslinked by irradiation with γ-ray or electron ray, or it is thermally or chemically crosslinked. Among these methods, the crosslinking by irradiation with γ-ray or electron ray is preferable, because the residue of an initiator or the like is not left to remain and because the material-penetrating degree is high. In this case, the crosslinking of poly(vinylpyrrolidone) is accelerated in the coexistence of water. Therefore, it is preferable to carry out the crosslinking treatment while the hollow fiber membrane bundle is being in a wet state.
The presence of oxygen during the crosslinking treatment accelerates the deterioration of poly(vinylpyrrolidone) and increases the amount of eluting poly(vinylpyrrolidone) and simultaneously accelerates the generation of hydrogen peroxide. Therefore, it is preferable to crosslink poly(vinylpyrrolidone) under an atmosphere having an oxygen concentration as low as possible. In this sense, it is preferably recommended to subject the hollow fiber membrane bundle in a wet state to the crosslinking treatment, as mentioned above.
When the hollow fiber membrane bundle in a dried state is subjected to a crosslinking treatment, it is effective to increase the humidity of an atmosphere for the crosslinking treatment, or to increase the water content of the hollow fiber membrane bundle. Preferably, careful attentions should be paid to inhibit the oxidation deterioration of poly(vinylpyrrolidone): that is, the crosslinking is carried out under an atmosphere of an inert gas such as a nitrogen gas or the like, or under an atmosphere deoxgenated with a deoxidant. The crosslinking treatment may be done before the hollow fiber membrane bundle is packed in a blood purifier or after the same is fabricated into a module.

The insolubilization of poly(vinylpyrrolidone) by crosslilking according to the present invention is evaluated based on the solubility of the crosslinked hollow fiber membrane bundle in diemthylformamide. In detail, 10 g of the hollow fiber membrane is weighed after the crosslinking treatment and is then dissolved in 100 ml of dimethylformamide. This solution is centrifuged at 1,500 rpm for 10 minutes, using a centrifugal separator, and then, the supernatant is

removed. To the residual insoluble matter is again added 100 ml of dimethylformamide, and the mixture is stirred and the resulting solution is centrifuged under the same conditions. After that, the supernatant is removed, and the residual solid matter is evaporated to a dryness. The content of the insoluble matter is determined from the amount of the dried solid matter.

The content of the insoluble matter is preferably 0.5 to 40 mass %, more preferably 1 to 35 mass %.

In case of a module filled with a liquid, firstly, the liquid is drained from the module, and then, pure water is allowed to flow in the passage on the side of a dialyzing fluid at a rate of 500 mL/min. for 5 minutes, followed by the flowing of pure water in the passage on the side of blood at a rate of 200 mL/min. for 5 minutes. Finally, pure water is passed at a rate of 200 mL/min. as if permeating the membrane from the blood side to the dialyzing fluid side, to thereby complete the washing. Then, the hollow fiber membrane bundle is removed from the washed module and is freeze-dried for use as a sample for measuring an insoluble matter. In case of a module of the dried hollow fiber membrane bundle, the same washing is done for use as a sample for measurement.

When the hollow fiber membrane bundle in a module filled with a liquid is measured, a sample treated in the same manner as above is used for measurement of any of the amount of eluting poly(vinylpyrrolidone), the amount of eluting hydrogen peroxide and the absorbance of UV (with a wavelength of 220 to 350 nm) regulated in the Approval Standard for Dialysis-type Artificial Kidney Apparatus.

The amount of eluting hydrogen peroxide is preferably 5 ppm or less, more preferably 4 ppm or less, still more preferably 3 ppm or less. When this amount exceeds 5 ppm, the storage stability of the hollow fiber membrane bundle becomes poor because of the oxidation deterioration of poly(vinylpyrrolidone) due to the hydrogen peroxide as described above, and in some cases, the amount of eluting poly(vinylpyrrolidone) becomes larger, when the hollow fiber membrane bundle is stored over a long period of time. The degradation of the storage stability is most markedly indicated by an increase in the amount of eluting poly(vinylpyrrolidone). In addition, the deterioration of the polysulfone polymer is induced to make the hollow fiber membrane fragile; or the deterioration of a polyurethane adhesive for use in the fabrication of a module is accelerated to increase the eluting amount of a deteriorated urethane oligomer or the like, which may possibly lead to poor safety. Increases in the amounts of eluting substances induced by the oxidizing action of hydrogen peroxide while the hollow fiber membrane bundle is being stored over a long period of time can be evaluated by measuring the absorbance of UV (220 to 350 nm) regulated in the Approval Standard for Dialysis-type Artificial Kidney Apparatus.

The amount of eluting hydrogen peroxide is also determined by using an eluate obtained by a method according to the eluation test method regulated in the Approval Standard for Dialysis-type Artificial Kidney Apparatus.

In the present invention, the polysulfone permselective hollow fiber membrane bundle is divided and cut along the lengthwise direction thereof, to obtain 10 portions thereof, each of which is then measured for the amount of hydrogen peroxide eluting therefrom. Preferably, all the portions show hydrogen peroxide-eluting amounts of 5 ppm or less. As described above, when hydrogen peroxide is present in a specified site of the hollow fiber membrane bundle, the deterioration reaction of the materials of the hollow fiber membrane bundle starts from such a site and transmits to a whole of the hollow fiber membrane bundle. Therefore, it is needed that the content of hydrogen peroxide in the hollow fiber membrane bundle for use as a module should be maintained at a given amount or less alongside the overall lengthwise direction thereof. The oxidation deterioration of poly(vinylpyrrolidone) initiated by hydrogen peroxide present in a specified site of the hollow fiber membrane bundle sequentially spreads all over the hollow fiber membrane bundle, so that the amount of hydrogen peroxide further increases due to such deterioration, and simultaneously, the molecular weight of the deteriorated poly(vinylpyrrolidone) decreases, which facilitates the eluation of such poly(vinylpyrrolidone) from the hollow fiber membrane bundle. Because of this sequential deterioration reaction, the amounts of eluting hydrogen peroxide and poly(vinylpyrrolidone) increase while the hollow fiber membrane bundle is being stored over a long period of time, which results in poor safety when the hollow fiber membrane bundle is used as a blood purifier.

When the hollow fiber membrane bundle is subjected to the crosslinking treatment, hydrogen peroxide is generated by the deterioration of poly(vinylpyrrolidone), and simultaneously, hydrogen peroxide which has been present during the crosslinking treatment accelerates the generation of hydrogen peroxide. Therefore, the above-described means for inhibiting the generation of hydrogen peroxide is needed for the crosslinking treatment. In another preferred embodiment, the hollow fiber membrane bundle is divided into 10 portions (substantially even portions) in the lengthwise direction, and all of such portions are measured for the amounts of hydrogen peroxide eluting therefrom, and all of them show 3 ppm or less in the hydrogen peroxide-eluting amount. Preferably, such a permselective hollow fiber membrane bundle should be subjected to a crosslinking treatment. By doing so, the primary requirement of the present invention can be achieved: that is, all the 10 portions into which the permselective hollow fiber membrane bundle is divided along the lengthwise direction are measured for the amounts of hydrogen peroxide eluting therefrom, and show 5 ppm or less of eluting hydrogen peroxide. More preferably, all the portions of the hollow fiber membrane bundle should show 2 ppm or less of eluting hydrogen peroxide.

When the hollow fiber membrane bundle of the present invention is subjected to an eluation test regulated in the Approval Standard for Dialysis-type Artificial Kidney Apparatus after having stored at a room temperature for one year, the maximum of the UV absorbances of the eluate at a wavelength of 220 to 350 nm is preferably 0.10 or less,

more preferably 0.08 or less. The hollow fiber membrane bundle can gain this feature, by decreasing, to 5 ppm or less, the amounts of hydrogen peroxide eluting from all the above 10 portions into which the hollow fiber membrane bundle has been divided along the lengthwise direction.

To control the amount of eluting hydrogen peroxide within the above specified range, for example, it is effective to reduce, to 300 ppm or less, the content of hydrogen peroxide in poly(vinylpyrrolidone) used as a raw material. However, as mentioned above, hydrogen peroxide is also generated in the course of the manufacturing of hollow fiber membranes, and it is therefore important to strictly control the conditions for manufacturing the hollow fiber membrane. Particularly, the generation of hydrogen peroxide during the drying step in the manufacturing process gives a significant influence on the eluting amount of hydrogen peroxide. Therefore, the optimization of the drying conditions is important. This optimization of the drying conditions can be a particularly effective means to lessen the variation in the amount of eluting hydrogen peroxide in the lengthwise direction of the hollow fiber membrane.

Regarding the step of dissolving a spinning solution, it is known that, when the spinning solution comprising a polysulfone polymer, poly(vinylpyrrolidone) and a solvent is stirred and dissolved, and if the poly(vinylpyrrolidone) contains hydrogen peroxide, hydrogen peroxide is explosively increased in amount because of the influence of oxygen in a dissolution tank and the influence of heating for the dissolution of the spinning solution Therefore, the raw materials are fed into a dissolution tank whose atmosphere is previously replaced with an inert gas. As the inert gas, a nitrogen gas, an argon gas or the like is preferably used. As required, a solvent or a non-solvent may be added. In such a case, preferably, the oxygen dissolved in the solvent or the non-solvent is replaced with an inert gas before using the solvent or the non-solvent.

As another method to inhibit the generaion of hydrogen peroxide, it is also important to dissolve a membrane-forming solution in shorter time. To form the solution in shorter time, it is effective to raise the dissolving temperature and/or to increase the stirring rate. However, the deterioration and decomposition of poly(vinylpyrrolidone) tend to proceed because of the influences of the temperature, the stirring rate and the shearing force, when such measures are taken. In fact, as a result of the present inventors' researches, it is confirmed that the peak top of the molecular weight of poly (vinylpyrrolidone) in a membrane-forming solution shifts in the decomposing direction (i.e. on the side of lower molecular weights) along with an increase in the dissolving temperature, and that a shoulder which seems to indicate a decomposed product appears on the side of the lower molecular weights. Thus, raising the dissolving temperature in order to improve the dissolving rate of raw materials accelerates the deterioration/decomposition of poly(vinylpyrrolidone), which leads to the blending of a decomposed product of poly(vinylpyrrolidone) into the resultant permselective hollow fiber membrane. When such a hollow fiber membrane is used in, for example, a blood purifier, such a decomposed product elutes into the blood. Therefore, the quality and safety of such a blood purifier are inferior.

To overcome this problem, the present inventors have tried to blend raw materials at a lower temperature in order to inhibit the decomposition of poly(vinylpyrrolidone). The dissolution of the raw materials at a temperature of as extremely low as a freezing point requires a high running cost. Therefore, the temperature is from 5 to 70°C, preferably 60°C or lower. However, a simple measure to lower the dissolving temperature requires a longer dissolving time which may induce the deterioration/decomposition of poly(vinylpyrrolidone) and a lower efficiency of the operation and requires a large-scale apparatus. Therefore, this method has a problem in view of industrial manufacturing. Particularly when poly (vinylpyrrolidone) is dissolved at a low temperature, poly(vinylpyrrolidone) is not homogeneously dissolved, and it becomes difficult to further dissolve poly(vinylpyrrolidone), and a longer time is required to homogenously dissolve poly (vinylpyrrolidone).

As a result of the present inventors' extensive trials to dissolve poly(vinylpyrrolidone) at a lower temperature and in shorter time, they have found out that it is preferable to previously knead the components of a spinning solution prior to the dissolution thereof, followed by dissolving them. The present invention is accomplished based on this finding. The components such as a polysulfone polymer, poly(vinylpyrrolidone) and a solvent may be kneaded at once, or poly (vinylpyrrolidone) and the polysulfone polymer may be separately kneaded. It is to be noted that, when poly(vinylpyrrolidone) contacts oxygen, the deterioration of poly(vinylpyrrolidone) is accelerated to generate hydrogen peroxide as described above. Accordingly, it is important to pay careful attentions so as to prevent the contact between poly(vinylpyrrolidone) and oxygen: that is, the above kneading is carried out under an atmosphere replaced with an inert gas, and preferably, the kneading is carried out in a separate line. In a further method, poly(vinylpyrrolidone) and a solvent may be previously kneaded, and a polysulfone polymer may be directly supplied to a dissolution tank without previous kneading thereof. This method is also included in the scope of the present invention.

Separately from the dissolution tank, a kneading line may be provided for kneading the components, and then, the knead mixture may be supplied to the dissolution tank; or otherwise, a dissolution tank equipped with a kneading function may be used to carry out both of kneading and dissolution in the dissolution tank. In the former case where the kneading and the dissolution are carried out in the separate apparatuses, the type and mode of the kneading apparatus are not limited: that is, the kneading apparatus may be either of batch type or of continuous type. A static method using a static mixer or the like may be employed, or a dynamic method using a kneader or an agitation type kneader may be employed, although the latter type is preferable in view of the kneading efficiency. This dynamic kneading method is not

limited, and it may be any of pin type, screw type, agitator type and the like, among which the screw type is preferable. The shapes and the number of revolutions of the screws may be optionally selected in consideration of a balance between the kneading efficiency and heat generation.

On the other hand, the type of the dissolution tank equipped with the kneading function is not limited. However, it is recommended to employ, for example, a knead-dissolving apparatus of the type which exhibits a kneading effect by its so-called planetary motions: that is, two frame type blades self-rotate and revolve round each other in the apparatus, and examples thereof are a planetarium mixer and a trimix of INOUE MFG. INC.

The ratio of the resin components, i.e. poly(vinylpyrrolidone) and a polysulfone polymer to a solvent in the kneading step is not limited. However, the mass ratio of the resin components to the solvent is preferably from 0.1 to 3, more preferably from 0.5 to 2.

As described above, the technical point of the present invention is to inhibit the deterioration of poly(vinylpyrrolidone) and simultaneously to efficiently dissolve the same. Therefore, preferably, in a system in relation to at least poly(vinylpyrrolidone), the kneading and dissolving are carried out at a temperature not higher than 70°C under a nitrogen atmosphere. In case where poly(vinylpyrrolidone) and a polysulfone polymer are kneaded in separate lines, respectively, the above method may be applied to the kneading line for the polysulfone polymer. There is a relationship of antinomy between the efficiencies of kneading and dissolving and heat generation. The use of an apparatus capable of avoiding this antinomy relationship and the selection of conditions are important factors of the present invention. In this sense, a cooling method for the kneading mechanism is important, and careful attentions should be paid thereto.

Subsequently, the knead mixture kneaded by the above method is dissolved. While the dissolving method is not limited, for example, a dissolving method using a stirrer type dissolving apparatus may be employed. To dissolve the knead mixture at a lower temperature and in shorter time (within 3 hours), the Froude number ($Fr = n^2d/g$) is preferably from 0.7 to 1.3, and the Reynolds number ($Re = nd^2\rho/\mu$) is preferably from 50 to 250, wherein n represents the number of revolutions per second (rps) of the blades; $\rho$, the density ($Kg/m^3$); $\mu$, the viscosity (Pa.s); g, the gravitational acceleration (= 9.8 $m/s^2$); and d, the diameter of the stirring blade (m). When the Froude number is too large, the inertia force becomes stronger so that the raw materials fly in the tank and adhere to the wall and ceiling of the tank. As a result, a desired composition of a membrane-forming solution can not be obtained. Therefore, the Froude number is more preferably not larger than 1.25, still more preferably not larger than 1.2, far still more preferably not larger than 1.15. On the other hand, when the Froude number is too small, the force of inertia weakens so that the dispersibility of the raw materials tends to lower, and particularly, poly(vinylpyrrolidone) can not be homogeneously dissolved, and is hard to be further dissolved, or it takes longer in homogenous dissolution thereof. Therefore, the Froude number is more preferably not smaller than 0.75, still more preferably not smaller than 0.8.

When the Reynolds number is too large, a longer time is required to degas the membrane-forming solution or the degassing of the solution becomes insufficient, because of the bubbles involved into the solution while the solution being stirred, since the membrane-forming solution of the present invention is a low viscous fluid. Therefore, the Reynolds number is more preferably not larger than 240, still more preferably not larger than 230, far still more preferably not larger than 220. On the other hand, when the Reynolds number is too small, the stirring force tends to be smaller so that non-homogenous dissolution is likely to occur. Therefore, the Reynolds number is more preferably not smaller than 35, still more preferably not smaller than 40, far still more preferably not smaller than 55, and particularly not smaller than 60. When a hollow fiber membrane is formed of such a spinning solution, the filament-drawing property tends to lower due to the presence of bubbles, which leads to a lower operability.

In addition, in view of the quality of the resultant membrane, the bubbles involved into the membrane become a defect of the membrane at such a site, which leads to a poor air-tightness and a lower burst pressure of the membrane. The degassing of the spinning solution is effective, but such degassing is likely to induce a change in the composition of the spinning solution because of the control of the viscosity of the spinning solution or the evaporation of the solvent. Therefore, deliberate attentions are needed to degas the spinning solution.

Since poly(vinylpyrrolidone) tends to decompose due to the oxidation thereof under the influence of oxygen in an air, the dissolution of the spinning solution is preferably carried out under an inert gas atmosphere. As the inert gas, nitrogen or argon is used, of which nitrogen is preferably used. In the dissolution of the spinning solution, the concentration of the residual oxygen in the tank is preferably 3% or less. When the pressure for charging a nitrogen gas is increased, the dissolution time is expected to be shorter, while the cost for an apparatus capable of generating such a high pressure becomes higher, and the safety for operation becomes lower. In view of theses points, the pressure for charging an inert gas is preferably from the atmospheric pressure to 2 $kgf/cm^2$.

The stirring blades to be used in the present invention are of the shapes which are used for dissolving a low viscous membrane-forming solution, and examples of such blades include, but not limited to, radial stream types such as disc turbine type, paddle type, curved blade fan turbine type and feather turbine type; and axial flow types such as propeller type, inclined paddle type and Faudler type.

The above-described low temperature dissolving method makes it possible to inhibit the deterioration/decomposition of a hydrophilic polymer and to provide a highly safe hollow fiber membrane. More specifically, it is preferable

to use a spinning solution which has been left to stand within a residence time of 24 hours after the dissolution of raw materials. This is because it is recognized that thermal energy, accumulated while a membrane-forming solution is thermally insulated, may deteriorates the raw materials.

To control the amount of eluting hydrogen peroxide within the range specified, it is important to avoid the contact with oxygen in the drying step. For example, the hollow fiber membrane is dried under an atmosphere replaced with an inert gas. However, this method is disadvantageous in view of cost. As an inexpensive drying method, it is effective and recommended to dry the hollow fiber membrane by irradiation with microwaves under reduced pressure. In general drying of a material by removing a liquid therefrom, it is known that either application of a reduced pressure or irradiation of microwaves is singly employed in combination with such drying. However, the use of a reduced pressure in combination with microwaves at the same time so as to dry a material is generally hard to employ, in consideration of the properties of microwaves. The present inventors have employed this combination which involves difficulties, in order to prevent the oxidation deterioration of poly(vinylpyrrolidone) and to improve the safety of the hollow fiber membrane by reducing the amount of materials eluting from the hollow fiber membrane and to improve the productivity thereof. They further have optimized the conditions for drying to thereby develop an economically advantageous method which is able to solve the above discussed problems.

The preferable conditions for this drying method are as follows: that is, a hollow fiber membrane bundle is dried by irradiation with microwaves having an output of 1 to 100 KW under a reduced pressure of 20 KPa or lower. Preferably, the frequency of the microwave is set at 1,000 to 5,000 MHz, and the highest temperature which the hollow fiber membrane bundle has while being dried is preferably 90°C or lower. The employment of the decompression method is effective to accelerate the evaporation of the moisture and thus has advantages in that the output of microwave can be lowered, in that the irradiation time of microwave can be reduced, and additionally in that the elevation of the temperature of the hollow fiber membrane bundle is suppressed at a relatively low temperature. Because of these advantages, the performance of the hollow fiber membrane bundle as a whole is hardly affected. A further excellent point of the drying under reduced pressure is that the drying can be carried out at relatively low temperature, which is particularly effective to markedly inhibit the deterioration and decomposition of a hydrophilic polymer. Accordingly, the drying temperature is preferably from 20 to 80°C, more preferably from 20 to 60°C, still more preferably from 20 to 50°C, far still more preferably from 30 to 45°C.

The drying under reduced pressure means that the center portion and the outer peripheral portion of the hollow fiber membrane bundle are evenly decompressed, and thus, the evaporation of the moisture is uniformly accelerated to thereby evenly dry the hollow fiber membranes. Consequently, it becomes possible to avoid damage of the hollow fiber membrane bundle due to uneven drying thereof. Further, the irradiation with microwave is effective to substantially evenly heat the center portion and the overall peripheral portion of the hollow fiber membrane bundle. As a result of the synergism of the even heating and the even decompression of the hollow fiber membrane bundle, an unique effect can be produced in the drying of the hollow fiber membrane bundle. The decompression degree may be arbitrarily selected according to an output of microwave, the total moisture content in a hollow fiber membrane bundle and the number of hollow fiber membrane bundles to be dried. To prevent an increase in the temperature of the hollow fiber membrane bundle being dried, the decompression degree is preferably 20 kPa or lower, more preferably 15 kPa or lower, still more preferably 10 kPa or lower. Too high decompression degree not only lowers the moisture-evaporating efficiency but also raises the temperature of the polymer which forms the hollow fiber membrane bundle, to thereby induce the deterioration of the polymer. The lower the decompression degree, the better it is to inhibit an increase in the temperature of the polymer and to improve the drying efficiency. However, it costs higher to maintain the sealing degree of the apparatus. Accordingly, the decompression degree is preferably 0.1 kPa or higher, more preferably 0.25 kPa or higher, still more preferably 0.4 kPa or higher.

While microwave having a higher output is preferable to reduce the drying time, too high an output is undesirable because excessive drying or excessive heating is likely to deteriorate and decompose poly(vinylpyrrolidone), if a hollow fiber membrane bundle contains poly(vinylpyrrolidone), and is likely to cause a problem in that such a hollow fiber membrane bundle is hard to wet in use. Even an output of lower than 0.1 kW is possible to dry a hollow fiber membrane bundle, however, such a low output requires a longer drying time, which may leads a poor treating efficiency. An optimal combination of a decompression degree with an output of microwave may be arbitrarily selected according to the moisture content retained in a hollow fiber membrane bundle and the number of hollow fiber membrane bundles to be treated.
A rough standard for satisfying the drying conditions according to the present invention is described: for example, when 20 hollow fiber membrane bundles, each one having 50 g of moisture content, are dried, it is appropriate to set the output of microwave at 1.5 kW, and the decompression degree, at 5 kPa, relative to the total moisture content of 1,000 g (= 50 g X 20).

The output of microwave is more preferably from 0.1 to 80 kW, still more preferably from 0.1 to 60 KW. The output of microwave is determined from, for example, the total number of hollow fiber membrane bundles and the total moisture content. However, sudden irradiation of microwave having a high output makes it possible to dry a hollow fiber membrane bundle in a shorter time, but is likely to partially denature the hollow fiber membrane bundle and to shrink or

deform the same. For example, the vigorous drying of a hollow fiber membrane bundle containing a water retainer or the like by irradiation with microwave having a high output is likely to fly and dissipate the water retainer. The method of drying by irradiation with microwave under a reduced pressure hitherto has never been invented. According to the present invention, when a hollow fiber membrane bundle is dried by irradiation with microwave under a reduced pressure, the evaporation of the aqueous liquid is accelerated even at a relatively low temperature. This advantage provides double effects that the deterioration of poly(vinylpyrrolidone) and the damage of the hollow fiber membranes such as deformation thereof attributed to the irradiation with microwave of high output and a high temperature can be prevented.

The method of drying by irradiation with microwave under reduced pressure, according to the present invention, may be carried out not only in one step but also in a plurality of steps. In case of one-step drying, the output of microwave is kept constant. In case of multi-step drying, the output of microwave is sequentially decreased in accordance with the proceeding degree of drying. Hereinafter, this multi-step drying is described.

When a hollow fiber membrane bundle is dried under a reduced pressure and at a relatively low temperature of about 30 to about 90°, it is preferable to employ the multi-step drying method in which the output of microwave is sequentially decreased in accordance with the proceeding degree of drying the hollow fiber membrane bundle. In this method, the decompression degree, temperature, output of microwave and irradiation time are determined in consideration of the total amount of the hollow fiber membrane bundles to be dried, an industrially acceptable and appropriate drying time, and so on.

The multi-step drying may be carried out in an optional number of steps, for example, 2 to 6 steps. However, in view of productivity, drying in 2 to 4 steps is industrially acceptable. In case where the total moisture amount of a hollow fiber membrane bundle is relatively large, the multi-step drying is carried out, for example, at a temperature of not higher than 90°C under a reduced pressure of about 5 to about 20 kPa and by irradiation with microwave having an output which is stepwise changed: that is, the output of microwave is from 30 to 100 kW in the first step, followed by from 10 to 30 kW in the second step, 0.1 to 10 kW in the third step and so on, which can be determined, taken the microwave-irradiation time into account. When the difference between the outputs of microwaves is large, for example, when the higher output of microwave in one step is 90 kW, and the lower output thereof in another step, 0.1 kW, the number of steps to sequentially decrease the output may be increased to, for example, 4 to 8. In the present invention, the decompressing operation is performed in combination with the microwave-irradiating operation, and therefore, a hollow fiber membrane bundle can be dried at a relatively lower output of microwave. For example, the drying is carried out in the first step where the irradiation with microwave of an output of 10 to 20 kW is continued for about 10 to about 100 minutes, followed by the second step where the irradiation with microwave of an output of 3 to 10 kW is continued for about 5 to about 80 minutes, the third step where the irradiation with microwave of an output of 0.1 to 3 kW is continued for about 1 to about 60 minutes, and so on. Preferably, the output of microwave and the irradiation time in each of the steps are decreased in association with the decreasing degree of the total moisture content in the hollow fiber membrane bundle. This drying method is very mild to the hollow fiber membrane bundle, which is not at all expected from the conventional methods described in the above-cited Patent Literatures 8 to 10.

When the total moisture content in a hollow fiber membrane bundle is relatively small, for example, 400 mass % or less, it is effective to dry the bundle by irradiation with microwave of a low output of 12 kW or less. For example, when the total moisture content of hollow fiber membrane bundles to be dried at once is so relatively small as about 1 to about 7 kg, the bundles are dried at 80°C or lower, preferably 60°C or lower, under a reduced pressure of about 3 to about 10 kPa, while the output of microwave and the irradiating time are being adjusted according to the drying degree of the bundle as follows: that is, irradiation with microwave having an output of 12 kW or lower, for example, from about 1 to about 5 kW, is continued for about 10 to about 240 minutes, followed by irradiation with microwave having an output of 0.5 to lower than 1 kW for about 1 to about 240 minutes, preferably about 3 to about 240 minutes, and irradiation with microwave having an output of 0.1 to lower than 0.5 kW for about 1 to about 240 minutes. By doing so, the drying is evenly carried out. The decompression degree may be roughly set at 0.1 to 20 kPa in each of the steps. However, the decompression degree in each of the steps may be appropriately set according to a situation, in consideration of changes in the decreases of the total water amount and the moisture content of the hollow fiber membrane bundle. For example, in the first step where the moisture content of a hollow fiber membrane bundle is relatively large, the decompression degree is set at a smaller value (e.g. 0.1 to 5 kPa), and the output of microwave is set at a higher value (e.g. 10 to 30 kW); and in the second and third steps, the drying is carried out under a pressure slightly higher than the pressure of the first step and by irradiation with microwave (e.g. an output of 0.1 to 5 kW under a reduced pressure of 5 to 20 kPa). This operation of changing the decompression degree in each of the steps further distinguishes the characteristic of the present invention which rest in the drying by irradiation with microwave under a reduced pressure. Also, it is of course important to always pay attentions to uniform irradiation with microwave and an exhaust gas within the microwave irradiation apparatus.

In the present invention, it is effective to employ the method of drying a hollow fiber membrane bundle by irradiation with microwave under a reduced pressure, in combination with a drying method by alternately inversing the air-flowing direction, although complicated steps are required. The drying method by irradiation with microwave and the

drying method by alternately inversing the air flow direction have advantages and disadvantages in themselves, respectively. These methods in combination are employed in order to obtain a high quality product. It is also possible to dry a hollow fiber membrane bundle by employing the drying method by alternately inversing the air flow direction in the first stage, and employing the drying method by irradiation with microwave under a reduced pressure in the next stage, at a point of time when the hollow fiber membrane bundle has been dried to an average moisture content of about 20 to about 60 mass %. In this case, a combined drying method may be employed which comprises the step of irradiating a hollow fiber membrane bundle with microwave to dry the same, followed by the step of drying the same by alternately inversing the air flow direction. How to select the methods in combination is determined in consideration of the quality of a hollow fiber membrane bundle obtained after the drying, particularly the quality of a polysulfone permselective hollow fiber membrane bundle which is to have no partial sticking of hollow fiber membranes in the lengthwise direction. While these drying methods can be concurrently carried out, this is not practically advantageous, since a complicated apparatus and complicated steps are required, which leads to a higher cost. Otherwise, an effective heating means such as infrared radiation or the like may be used in combination with the drying method according to the present invention.

The highest temperature which a hollow fiber membrane bundle being dried has can be measured as follows: an irreversible thermo label is stuck to a side edge of a protective film for the hollow fiber membrane bundle, and the hollow fiber membrane bundle is dried, and the indication of the label is confirmed after the removal of the dried bundle. In this regard, the highest temperature of the hollow fiber membrane being dried is preferably not higher than 90°C, more preferably not higher than 80°C, still more preferably not higher than 70°C. When the highest temperature of the bundle is high, the structure of the membrane is likely to change, which may lead to poor performance of the resultant hollow fiber membrane bundle or to the oxidation deterioration thereof. Especially, it is important to prevent an increase in the temperature of a hollow fiber membrane bundle comprising poly(vinylpyrrolidone) as much as possible, because poly(vinylpyrrolidone) is easily decomposed by heat. To prevent an increase in the temperature of the hollow fiber membrane bundle, it is effective to optimize the decompression degree and the output of microwave and to intermittently irradiate microwave. The lower the drying temperature, the better. However, the drying temperature is preferably 30°C or higher in view of cost for maintaining the decompression degree and the saving of the drying time.

The frequency of microwave is preferably from 1,000 to 5,000 MHz, more preferably from 1,500 to 4,000 MHz, still more preferably from 2,000 to 3,000 MHz, in view of an effect to inhibit irradiation spots on a hollow fiber membrane bundle and an effect to extrude water from the pores of the hollow fiber membrane bundle.

In the drying by irradiation with microwave, it is important to evenly heat and dry a hollow fiber membrane bundle. In the drying by irradiation with microwave, uneven heating is caused due to reflected waves incidental to the irradiation with microwave. Therefore, it is important to device a method for reducing the uneven heating due to the reflected waves. As such a method, the method disclosed in, for example, JP-A-2000-340356 can be preferably employed, in which a reflecting plate is provided in an oven to reflect such reflected waves to thereby evenly heat a hollow fiber membrane bundle, although the method is not limited to this one.

Further, it is preferable not to completely dry a hollow fiber membrane bundle. When the bundle has been completely dried, the deterioration of poly(vinylpyrrolidone) therein is accelerated to thereby appreciably facilitate the generation of hydrogen peroxide. In addition, when such a completely dried hollow fiber membrane bundle is again wetted for use, the wettability thereof becomes poor, or poly(vinylpyrrolidone) therein becomes hard to absorb water and tends to elute from the hollow fiber membrane. The moisture content of the dried hollow fiber membrane bundle is preferably from 1 mass % or more to less than a saturated moisture content, more preferably not less than 1.5 mass %. When the moisture content of the hollow fiber membrane is too large, bacteria are likely to propagate during the storage of the hollow fiber membrane, or the hollow fiber membrane is likely to disintegrate due to its own weight, or a failure in adhesion is likely to occur in the hollow fiber membrane bundle when a module is fabricated using the same. Therefore, the moisture content of the hollow fiber membrane is preferably not more than 10 mass %, more preferably not more than 7 mass %.

As a method for decreasing the amount of hydrogen peroxide eluting from the hollow fiber membrane bundle to 5 ppm or less, it is effective to wash the hollow fiber membrane bundle to thereby remove hydrogen peroxide which incomes from poly(vinylpyrrolidone) as a raw material or which generates in the manufacturing process of the hollow fiber membrane bundle.

In the present invention, it is important to suppress the content of poly(vinylpyrrolidone) in the outer surface of the hollow fiber membrane within a specified range, in order to balance the actions of preventing the eluation of poly (vinylpyrrolidone) and the infiltration of endotoxin into the blood side and of preventing the sticking of the hollow fiber membranes to one another while they are being dried. To adjust the content of poly(vinylpyrrolidone) within such a specified range, for example, the ratio of poly(vinylpyrrolidone) to a polysulfone polymer is adjusted within a specified range, and the conditions for manufacturing the hollow fiber membranes are optimized. It is also an effective method to wash the resultant hollow fiber membranes. The following are effectively employed as the membrane-forming conditions: that is, the humidity of the air gap of the exit of a nozzle is controlled; the drawing condition, the temperature of a coagulation bath, and the composition ratio of a solvent to a non-solvent in a coagulating liquid are optimized; and a

washing step is included.

As a coagulating liquid in an internal bath, an aqueous solution of 0 to 80 mass % of dimethylacetoamide (DMAc) is preferably used. The concentration of dimethylacetoamide in the aqueous solution is more preferably 15 to 70 mass %, still more preferably 25 to 60 mass %, far still more preferably 30 to 50 mass %. When the concentration of the aqueous solution in the inner coagulation bath is too low, the dense layer on the blood-contacting surface becomes thick, which is likely to lead to poor solute permeability. On the other hand, when this concentration is too high, the dense layer is likely to be incompletely formed, and the fractionation characteristics tends to lower. As a coagulation liquid in an outer bath, an aqueous solution of 0 to 50 mass % of DMAc is preferably used. When the concentration of the aqueous solution in the outer coagulation bath is too high, the pore percentage and the average pore area of the outer surface of the hollow fiber membrane become too large, so that the backflow of endotoxin into the blood side may frequently occur while the hollow fiber membrane bundle is being used for hemodialysis, or that the burst pressure is likely to decrease. Therefore, the concentration of the aqueous solution in the outer coagulation bath is more preferably not higher than 40 mass %, still more preferably not higher than 30 mass %, far still more preferably not higher than 25 mass %. On the other hand, when the concentration of the aqueous solution in the outer coagulation bath is too low, a large amount of water is needed to dilute a solvent introduced from a spinning solution, and the cost for disposal of waste liquid becomes higher. Therefore, the lower limit of the concentration of the aqueous solution in the outer coagulation bath is more preferably not lower than 5 mass %, still more preferably not lower than 10 mass %, far still more preferably not lower than 15 mass %.

In the manufacturing of the hollow fiber membrane of the present invention, it is preferable not to substantially draw the hollow fiber membrane before the structure thereof has been perfectly fixed. The wording of "not substantially draw" means that excessive relaxation or tension is not applied to the membrane-forming solution extruded from a nozzle. To do so, for example, the speed of a roller used in the spinning step is controlled. The ratio of the extrusion linear speed to the speed of the first roller in a coagulation bath (i.e. draft ratio) is preferably from 0.7 to 1.8. When the draft ratio is low, the hollow fiber membrane being fed is relaxed, which may leads to a lower productivity. Therefore, the draft ratio is more preferably not lower than 0.8, still more preferably not lower than 0.9, far still more preferably not lower than 0.95. When the draft ratio is too high, the structure of the hollow fiber membrane is likely to be broken because of the tearing of the dense layer of the hollow fiber membrane and so on. Therefore, the draft ratio is more preferably not higher than 1.7, still more preferably not higher than 1.6, far still more preferably not higher than 1.5, particularly not higher than 1.4. By controlling the draft ratio within this range, the deformation or destruction of the pores can be prevented, and the pores are protected from clogging due to the protein in the blood, with the result that the hollow fiber membrane can exhibit reliable performance over time and sharp fractionation characteristics.

In the present invention, it is important to carry out a washing step prior to the above-described drying step in the course of the manufacturing of the hollow fiber membrane bundle. The washing step is introduced as a means for decreasing the amount of eluting hydrogen peroxide or a means for controlling the content of poly(vinylpyrrolidone) in the outer surface of the hollow fiber membrane within the specified range, as described above. For example, the wet hollow fiber membrane having passed through a water washing bath is directly wound onto a hank to make a bundle of 3,000 to 20,000 hollow fiber membranes. Next, the resultant hollow fiber membrane bundle is washed to remove excess of the solvent and poly(vinylpyrrolidone). In the present invention, preferably, the hollow fiber membrane bundle is immersed in hot water of 70 to 130°C or an aqueous solution of 10 to 40 vol % ethanol or isopropanol of room temperature to 50°C for washing.

(1) In case of washing with hot water, the bundle of hollow fiber membranes is immersed in an excess of RO water at a temperature of 70 to 90°C for 15 to 60 minutes, and then is removed therefrom, followed by centrifugal hydroextraction. This operation is repeated 3 or 4 times while the RO water being replaced with fresh one. Thus, the bundle of hollow fiber membranes is washed.
(2) Another method of washing the bundle of hollow fiber membranes may be employed, in which the bundle of the membranes is immersed in an excess of RO water in a compressed container at 121°C for about 2 hours for the treatment of the same.
(3) In case of washing with ethanol or isopropanol, preferably, the same operation as in the method (1) is repeated.
(4) Also preferable is a washing method comprising the steps of radially setting the bundle of hollow fiber membranes in a centrifugal washing container, and shower-like spraying a washing water of 40 to 90°C to the bundle of membranes from the center of rotation, so as to carry out centrifugal washing for 30 minutes to 5 hours.

In this regard, two or more of the above washing methods may be employed in combination. When the treating temperature is too low in any of the methods, it is needed to increase the washing operations in number, which leads to higher cost. When the treating temperature is too high, the decomposition of poly(vinylpyrrolidone) tends to accelerate, and the washing efficiency, on the contrary, tends to lower. The above washing makes it possible to optimize the content of poly (vinylpyrrolidone) in the outer surfaces of the membranes, and to inhibit the sticking of the membranes or to decrease

the amounts of the eluting substances, which leads to a decrease in the eluting amount of hydrogen peroxide.

A blood purifier according to the present invention is packed with the above-described polysulfone permselective hollow fiber membrane bundle, particularly packed with the bundle of the polysulfone permselective hollow fiber membranes which contain poly(vinylpyrrolidone) and which are manufactured by the foregoing process. That is, the polysulfone permselective hollow fiber membrane bundle of the present invention has a feature in that, when this hollow fiber membrane bundle is divided into 10 portions in the lengthwise direction for measurement, the amount of hydrogen peroxide eluting from each of the 10 portions is found to be 5 ppm or less in every one thereof. The blood purifier comprising such a hollow fiber membrane bundle is suitable to achieve the object of the present invention.

This blood purifier is stored at room temperature for one year, and then is subjected to an eluation test regulated in the Approval Standard for Dialysis-type Artificial Kidney Apparatus, so as to measure the UV absorbance of an eluate obtained therefrom. In one of the preferred embodiments of the present invention, the maximum of the UV absorbance of the elulate at a wavelength of from 220 to 350 nm is 0.10 or less, more preferably 0.08 or less.

The blood purifier of the present invention is fabricated as a module by using the foregoing polysulfone permselective hollow fiber membrane bundle. By doing so, the intended characteristics can be imparted to the blood purifier. Accordingly, the polysulfone permselective hollow fiber membrane bundle packed in the blood purifier of the present invention should show an amount of eluting hydrogen peroxide of preferably 4 ppm or less, more preferably 3 ppm or less, which is one of the foregoing intended characteristics of the polysulfone permselective hollow fiber membrane bundle of the present invention. The polysulfone permselective hollow fiber membrane bundle of the present invention can be reliably manufactured at lower cost by the foregoing process.

When the hollow fiber membrane bundle of the present invention is used in a blood purifier, the burst pressure of the hollow fiber membrane bundle is preferably not lower than 0.5 MPa, and the rate of water permeation of the blood purifier is preferably not smaller than 150 ml/m$^2$/hr./mmHg. When the burst pressure is lower than 0.5 MPa, latent defects which may induce blood leakage can not be detected, as will be described later. When the rate of water permeation is too small, the dialyzing efficiency of the blood purifier tends to lower. It is effective to increase the diameters of the pores of the membranes and the number of the pores in order to improve the dialyzing efficiency. However, on the other hand, disadvantages such as a decrease in the strength of the membranes and occurrence of defects concurrently arise. Therefore, in the hollow fiber membrane of the present invention, the diameters of the pores of the outer surface of the membrane are optimized to thereby optimize the porosity of the support layer so that the resistance of the permeated solute can balance with the strength of the membrane. The rate of water permeation is more preferably not smaller than 200 ml/m$^2$/hr./mmHg, still more preferably not smaller than 250 ml/m$^2$/hr./mmHg, far still more preferably not smaller than 300 ml/m$^2$/hr./mmHg. When the rate of water permeation is too large, the water-removing control during hemodialysis becomes hard. Therefore, the rate of water permeation is preferably not larger than 2,000 ml/m$^2$/hr./mmHg, more preferably not larger than 1,800 ml/m$^2$/hr./mmHg, still more preferably not larger than 1,500 ml/m$^2$/hr./mmHg, far still more preferably not larger than 1,300 ml/m$^2$/hr./mmHg.

Generally, modules for use in blood purification are subjected to leak tests by compressing the interiors or exteriors of the hollow fiber membranes with an air, so as to check the defects of the hollow fiber membranes and the modules in the final stage for providing products. When some leakage is detected in a module by means of a compressed air, such a module is scrapped as a defective, or is repaired. The air pressure for use in the leak tests, in many cases, are several times larger than the proof pressure (usually 500 mmHg) for hemodialyzers. However, the present inventors have found out that, in case of hollow fiber type blood-purifying membranes having particularly high water permeability, minute flaws, crushes and tears of the hollow fiber membranes, which can not be detected by usual leak tests, often lead to the cutting and pin holes of the hollow fiber membranes which would occur in the course of the manufacturing steps subsequent to the leak tests (mainly, the steps of sterilization and packing) and at the step of the transportation thereof or the handling thereof at clinical sites (unpacking or priming). Such defects of the hollow fiber membranes induce further troubles such as the leakage of blood during treatments, etc. The present inventors have further found that these troubles can be avoided by adjusting the burst pressure to the above-specified range.

It is also effective to reduce the thickness deviation of the hollow fiber membrane bundle, in order to inhibit the occurrence of the above-mentioned latent defects.

The burst pressure referred to in the present invention is an index of the pressure resistant performance of hollow fiber membranes fabricated into a module. The burst pressure is measured by compressing the interior of a hollow fiber membrane with a gas, and gradually increasing the pressure so as to find a pressure which bursts the hollow fiber membrane when the hollow fiber membrane can not withstand the internal pressure gradually increased. A higher and higher burst pressure leads to a lower possibility of occurrence of cutting or pin holes of hollow fiber membranes in use. Therefore, the burst pressure is preferably not lower than 0.5 MPa, more preferably not lower than 0.55 MPa, still more preferably not lower than 0.6 MPa. When the burst pressure is lower than 0.5 MPa, the hollow fiber membrane is likely to have latent defects. A higher and higher burst pressure is preferable. In order to mainly increase the burst pressure, the thickness of a hollow fiber membrane is increased, or the porosity of a membrane is excessively decreased. However, in this case, desired membrane performance can not be obtained from the resultant membrane. Therefore, the burst

pressure is preferably lower than 2.0 MPa, more preferably lower than 1.7 MPa, still more preferably lower than 1.5 MPa, far still more preferably lower than 1.3 MPa, and particularly lower than 1.0, when hollow fiber membranes are used as blood-dialyzing membranes.

The thickness deviation, i.e., non-uniformity in the thickness of 100 hollow fiber membranes in a module, found when the sections of the membranes are observed, is represented by a ratio of a maximum value and a minimum value of the thickness deviation. Preferably, the minimum thickness deviation out of those of 100 hollow fiber membranes is not smaller than 0.6. When even one hollow fiber membrane, out of the 100 hollow fiber membranes, has a thickness deviation of smaller than 0.6, such a hollow fiber membrane has possibility to cause a leakage when the module is used in a clinical site. Therefore, the thickness deviation referred to in the present invention is not represented by an average value, but is represented by a minimum value among the thickness deviations of 100 hollow fiber membranes. The higher the thickness deviation, the better it is, because the uniformity of the membranes can be improved, because the emergence of latent defects can be prevented, and because the burst pressure can be increased. Therefore, the thickness deviation of membranes is more preferably not smaller than 0.7, still more preferably not smaller than 0.8, far still more preferably not smaller than 0.85. When the thickness deviation is too small, the latent defects of the membrane tend to emerge, and the burst pressure of the membrane tends to decrease, which may lead to blood leakage.

To obtain a thickness deviation of not smaller than 0.6, it is preferable to strictly uniform the widths of the slits of spinning nozzles, namely, the injection outlets for a spinning dope. Generally used as spinning nozzles for hollow fiber membranes are tube-in-orifice type nozzles each of which comprises an annular portion which injects a spinning dope, and a hole, inside the annular portion, which injects a core solution as a hollow portion-forming material. The slit width indicates the width of the outer annular portion which injects the spinning solution. By decreasing the variation in the slit width, the thickness deviation of spun hollow fiber membranes can be reduced. Specifically, the ratio of the maximum value to the minimum value of the slit width is adjusted to not smaller than 1.00 and not larger than 1.11. The difference between the maximum value and the minimum value is preferably not larger than 10 μm, more preferably not larger than 7 μm, still more preferably not larger than 5 μm, particularly not larger than 3 μm.

It is also effective to optimize the temperature of the nozzles, and the nozzle temperature is preferably 20 to 100°C. When the nozzle temperature is low, the nozzle temperature can not be stabilized because of the influence of a room temperature, and injection spots of the spinning dope is likely to form. Therefore, the nozzle temperature is more preferably not lower than 30°C, still more preferably not lower than 35°C, far still more preferably not lower than 40°C. When the nozzle temperature is high, the viscosity of the spinning dope excessively lowers, and the injection of the spinning dope becomes instable, or the thermal deterioration or decomposition of poly(vinylpyrrolidone) is likely to proceed. Therefore, the nozzle temperature is more preferably not higher than 90°C, still more preferably not higher than 80°C, far still more preferably not higher than 70°C.

As a method of raising the burst pressure, it is also effective to decrease the flaws of the surfaces of hollow fiber membranes to thereby decrease the latent defects thereof. As a method of decreasing the flaws of the surfaces of hollow fiber membranes, it is effective to optimize materials for rollers and guides for use in the steps of manufacturing hollow fiber membranes, and to optimize the surface roughness of such membranes. It is also effective that, when a module is fabricated using a bundle of hollow fiber membranes or when a bundle of hollow fiber membranes is inserted into a casing for a module, a device to allow the hollow fiber membranes not to contact the casing or a device to make it hard to rub the hollow fiber membranes with one another is provided.

In the present invention, preferably, the rollers to be used are planished at their surfaces, so as to prevent the hollow fiber membranes from having flaws thereon upon slipping. Preferably, the guides to be used are subjected to mat finishing or knurling process at their surfaces, so as avoid the contact resistance with the hollow fiber membranes as much as possible.

Preferably, the bundle of hollow fiber membranes is not directly inserted into the module casing. For example, the bundle of hollow fiber membranes is wrapped in an embossed film and then is inserted into the module casing, followed by removal of the film alone from the module casing.

As a method of preventing foreign matters from entering the hollow fiber membranes, it is effective to use raw materials containing less foreign matters, or to filter a spinning dope to thereby reduce the amount of foreign matters. In the present invention, it is preferable to use a filter having pores with diameters smaller than the thickness of the hollow fiber membrane bundle and to filter the spinning dope therethrough before injecting the spinning dope. This is described in more detail. A spinning dope homogeneously dissolved is allowed to pass through a sintered filter having pores with diameters of 10 to 50 μm, provided between a dissolution tank and nozzles. It is sufficient to carry out the filtration at least once. When the filtration treatment is carried out in several stages, the diameter of the pores of a filter to be used is gradually decreased, as the order of the stage is closer and closer to the final stage. This method is preferable to improve the filtration efficiency and to prolong the lifetime of the filters. The pore diameter of the filter is more preferably 10 to 45 μm, still more preferably 10 to 40 μm. When the pore diameter is too small, the back pressure tends to increase, and the quantitative determination tends to lower. As a method of preventing bubbles from entering the hollow fiber membranes, it is effective to degas the polymer solution for the membranes. Stationary degassing or

decompression degassing may be carried out, depending on the viscosity of the spinning dope. That is, after the inner atmosphere of the dissolution tank is decompressed to -100 to -750 mmHg, the same tank is sealed and is left to stand for 5 to 30 minutes. This operation is repeated several times to degas the spinning dope. When the decompression degree is too high, the cost for increasing the closeness of the system becomes higher, since the number of the degassing steps must be increased, which requires a longer time for the treatment. When the decompression degree is too low, the cost for improving the closeness of the system becomes higher. The total treating time is preferably 5 minutes to 5 hours. When the treating time is too long, poly(vinylpyrrolidone) is likely to be decomposed and deteriorated due to the influlence of the decompression. When the treating time is too short, the effect of degassing becomes insufficient.

## EXAMPLES

Hereinafter, the effectiveness of the present invention will be described by way of Examples thereof, which should not be construed as limiting the scope of the present invention in any way. In this regard, the methods of evaluating the physical properties in the following Examples are described below.

### 1. Water Permeability

A circuit on the side of the blood outlet of a dialyzer (nearer to the outlet than a pressure-measuring point) is pinched with forceps to stop the flowing to thereby make it a filter as a whole. Pure water maintained at 37°C is poured into a compression tank, and is fed to the dialyzer maintained at a constant temperature in a thermostat of 37°C, while the pressure being controlled with a regulator. The amount of a filtrate flowing from the side of a dialyzing fluid is measured with a graduated cylinder. The pressure difference between the membranes (TMP) is defined by the equation:

$$TMP = (Pi + Po)/2$$

In this equation, Pi represents a pressure on the side of the inlet of the dialyzer, and Po represents a pressure on the side of the outlet of the same. TMP is changed at 4 points to measure the filtered flow amounts. The water permeability of the hollow fiber membrane (mL/hr./mmHg) is calculated from the gradient of the relationship thereof. It is to be noted that the correlation function between TMP and the filtered flow amount should be not smaller than 0.999, and that TMP is measured under a pressure of not higher than 100 mmHg so as to lessen an error in pressure loss due to the circuit. The water permeability of the hollow fiber membrane is calculated from the membrane area and the water permeability of the dialyzer:

$$UFR(H) = UFR(D)/A$$

In this equation, UFR(H) represents the water permeability of the hollow fiber membrane (mL/$m^2$/hr./mmHg); UFR(D) represents the water permeability of the dialyzer (mL/hr./mmHg); and A represents the membrane area ($m^2$) of the dialyzer.

### 2. Calculation of Membrane Area

The membrane area of the dialyzer is calculated based on the inner diameter of the hollow fiber membranes:

$$A = n \times \pi \times d \times L$$

In this equation, n represents the number of the hollow fiber membranes in the dialyzer; π represents the ratio of the circumference of a circle to its diameter; d represents the inner diameter (m) of the hollow fiber membranes; and L represents the effective length (m) of the hollow fiber membranes in the dialyzer.

### 3. Burst Pressure

The dialyzing fluid side of a module packed with about 10,000 hollow fiber membranes is filled with water and is capped. A dry air or a nitrogen gas is fed from the blood side of the module at a room temperature so as to compress

the hollow fiber membranes at a rate of 0.5 MPa/minute. The internal pressure in the hollow fiber membranes is increased to find an air pressure which bursts the hollow fiber membranes and causes bubbles in the liquid filling the dialyzing fluid side of the module. This air pressure is defined as a burst pressure.

4. Deviation in Thickness

The sections of 100 hollow fiber membranes are observed with a projector of a magnification of 200. One hollow fiber membrane which has the largest difference in the thickness at its section is selected out of the hollow fiber membranes in one visual field, and the thickest portion and the thinnest portion of the section of this hollow fiber membrane are measured:

$$\text{Deviation in thickness} = \text{the thinnest portion}/\text{the thickest portion}.$$

The membrane thickness is perfectly uniform when the deviation in thickness is one (thickness deviation = 1).

5. Eluting Amount of Poly(vinylpyrrolidone)

An eluate is obtained according to the method regulated in the Approval Standard for Dialysis-type Artificial Kidney Apparatus, and poly(vinylpyrrolidone) in the eluate is determined by a colorimetric method.
In case of a dry hollow fiber membrane module, pure water (100 ml) is added to the hollow fiber membranes (1 g), and elution is made from the wet hollow fiber membranes at 70°C for one hour. The obtained eluate (2.5 ml) is sufficiently mixed with a 0.2 mol aqueous citric acid solution (1.25 ml) and a 0.006N aqueous iodine solution (0.5 ml), and the mixture is left to stand at a room temperature for 10 minutes. After that, the absorbance of the mixture at 470 ml is measured. Determination is made based on an analytical curve found by the measurement according to the above method, using poly(vinylpyrrolidone) as a sample.
In case of a wet hollow fiber membrane module, a physiological salt solution is allowed to pass through the passages on the dialyzing fluid side of the module at a rate of 500 mL/minute for 5 minutes, and then is allowed to pass through the passages on the blood side of the module at a rate of 200 mL/minute. After that, the physiological salt solution is passed from the bloodide to the dialyzing fluid side at a rate of 200 mL/minute for 3 minutes, while being filtered. After that, the membranes are freeze-dried. The dried membranes are used for the above determination.

6. UV Absorbance (220 to 350 nm)

The absorbance of an eluate obtained by the method described in the part of "Eluting Amount of Poly(vinylpyrrolidone)" is measured at a wavelength of from 200 to 350 nm, using a spectrophotometer (U-3000, manufactured by Hitachi, Ltd.) to find the maximal absorbance within this wavelength range.
The hollow fiber membrane bundle is divided at every 2.7 cm intervals along the lengthwise direction to obtain 10 regular portions. One gram of the hollow fiber membrane in a dried state is weighed from each of these portions for use as a sample. Then, the absorbances of all the samples are measured.
In case of a wet hollow fiber membrane module, it is treated in the same manner as described in the part of "Eluting Amount of Poly(vinylpyrrolidone)" to obtain a dry hollow fiber membrane, which is then used for measurement.

7. Determination of Hydrogen Peroxide

To an eluate (2.6 ml) obtained by the method described in the part of "Eluting Amount of Poly(vinylpyrrolidone)" is added a solution mixture of a hydrogen chloride solution of $TiCl_4$ mixed with an ammonium chloride buffer (pH 8.6) (0.2 ml) equivalent in molar ratio and an aqueous solution of a Na salt of 4-(2-pyridilazo)resorcinol. Further, a 0.4 mM coloring reagent (0.2 ml) is added, and the resulting mixture is heated at 50°C for 5 minutes, and then is cooled to room temperature. The absorbance of the resultant solution is measured at a wavelength of 508 nm. The same measurement is made on a sample to find an analytical curve. The amount of hydrogen peroxide is determined based on this analytical curve.
In measurement, a hollow fiber membrane bundle is divided at 2.7 cm regular intervals along the lengthwise direction to obtain 10 regular portions, and 1 g of the hollow fiber membrane is weighed from each of the portions as a sample. Then, all the samples are measured.
In case of a wet hollow fiber membrane module, it is treated in the same manner as described in the part of "Eluting

Amount of Poly(vinylpyrrolidone)" to obtain a dry hollow fiber membrane, which is then used for measurement.

8. Blood Leak Test

Bovine blood which is admixed with citric acid to be inhibited from coagulation and which is maintained at 37°C is fed to a blood purifier at a rate of 200 ml/minute, and is filtered at a rate of 20 ml/minute. The resulting filtrate is returned to the blood to thereby form a circulation system. After 60 minutes has passed, the filtrate of the blood purifier is collected, and red portions in the filtrate, due to the leakage of red blood cells, are visually observed. This blood leak test is conducted for each of 30 blood purifiers in either of Examples and Comparative Examples, and the number of modules which permit the blood to leak therefrom is counted.

9. Storage Stability of

Hollow Fiber Membrane Bundle

About 10,000 hollow fiber membranes in dried states, obtained in each of Examples and Comparative Examples, are inserted into a polyethylene pipe, and the pipe packed with the hollow fiber membranes is cut into bundles with predetermined lengths. The resultant bundle is packed in a casing at a packing percentage of 60 vol %, and the ends of the casing are adhered with an urethane resin. A module of which the hollow fiber membrane area is 1.5 $m^2$ is obtained by cutting out the resin portions. This module is filled with RO water and then is irradiated with γ-ray at an absorbed dose of 25 kGy so as to be crosslinked. The module irradiated with γ-ray is stored at a room temperature for one year. After that, the UV absorbance of the module at a wavelength of 220 to 350 nm is measured. The stability of the module is evaluated based on an increase in the UV absorbance (220 to 350 nm) thereof found after the storage. The hollow fiber membrane bundle is divided into 10 portion in the lengthwise direction as samples. An increase in the UV absorbance of each of the samples is also measured so that the stability of the module is evaluated based on the maximum value. The module of which the maximum value dose not exceed 0.10 is passed. In case of a crosslinked hollow fiber membrane bundle, it is stored without the above crosslinking treatment, and then is evaluated.

10. Amount of Insoluble Component

The hollow fiber membrane irradiated with γ-ray, weighing 10 g, is dissolved in dimethylformamide (100 ml) at room temperature, and the resulting solution is separated at 1,500 rpm for 10 minutes, using a centrifugal separator. The supernatant is removed, and dimethylformamide (100 ml) is again added to the insoluble residue. The mixture is stirred and is subjected to the same centrifugal separation, and the supernatant is removed. Dimethylformamide (100 ml) is again added to the residue, and the mixture is stirred and is subjected to the same centrifugal separation. After that, the supernatant is removed. The residual solid was evaporated to a dryness, and the content of the insoluble component is determined from the amount of the dried solid.
In case of a wet hollow fiber membrane module, it is treated by the same method described in the part of "Amount of Eluting Poly(vinylpyrrolidone)" and dried. Then, the content of the insoluble component is determined from the dried hollow fiber membranes.

(Example 1)

Polyethersulfone (Sumika-Excel(R) 4800P, manufactured by Sumika Chemtex Co., Ltd.) (1 mass part), poly (vinylpyrrolidone) (Colidone(R) K-90, manufactured by BASF) (0.144 mass parts) and dimethylacetoamide (DMAc) (1 mass part) were charged in a knead-melting machine of the type which efficiently kneaded the mixture by way of so-called planetary motions of two frame type blades which rotated by themselves and rotated around each other. The mixture was stirred and kneaded for 2 hours. Subsequently, a solution mixture of DMAc (3.02 mass parts) and RO water (0.16 mass parts) was added to the knead mixture in one hour. The mixture was further stirred for one hour with the stirrer of which the number of revolutions was increased, to form a homogeneous solution. This kneading and dissolution was carried out under a nitrogen atmosphere. The mixture was kneaded and dissolved while being cooled so that its temperature did not exceed 40°C. The Froude number and the Reynolds number in the final dissolution were 1.0 and 100, respectively. Then, a vacuum pump was used to decompress the interior of a system to -500 mmHg, and the system was immediately sealed so as not to change the composition of the membrane-forming solution due to the evaporation of the solvent or the like, and the system was left to stand for 15 minutes. This operation was repeated three times to degas the membrane-forming solution. After the completion of the degassing, the interior of the system was again replaced with a nitrogen gas and was kept to be weakly compressed. In this regard, poly(vinylpyrrolidone) containing 130 ppm of hydrogen peroxide was used. The resultant membrane-forming solution was allowed to pass through a two-staged sintered filter (30 μm and 15 μm). This solution was then injected from tube-in-orifice nozzles heated to 75°C, concurrently with an aqueous solution of 53 mass % of DMAc of 50°C as a hollow portion-forming material which had been previously degassed under a reduced pressure of -700 mmHg for 30 minutes. The strand of the injected solutions was allowed to pass through a drying section with a length of 400 mm, sealed from an external atmosphere by a spinning tube, and was then coagulated in an aqueous solution of 20 mass % of DMAc at 60°C. The resulting wet strand was directly wound onto a hank. The width of the nozzle slits of the tube-in-orifice nozzles was 60 μm on average, maximum 61 μm and minimum 59μ m. The ratio of the maximum value to the minimum value of the slit width was 1.03, and the draft ratio was 1.1. The rollers which the hollow fiber membranes contacted during the spinning step were all planished at their surfaces, and the guides were all mat-finished at their surfaces. A bundle of about 10,000 hollow fiber membranes was wrapped in a polyethylene film which was embossing-finished at its one surface on the side of the bundle of hollow fiber membranes. The same bundle was then cut into several portions with lengths of 27 cm. The cut portion of the bundle was washed in hot water of 80°C for 30 minutes, and this washing was repeated four times.

The obtained wet hollow fiber bundle was introduced into a microwave-irradiation type drier in which a reflecting plate was provided in its oven so as to enable even heating. Then, the hollow fiber membrane bundle was dried under the following conditions: it was heated by irradiation with microwave of an output of 1.5 kW under a reduced pressure of 7 kPa for 30 minutes, and then, the irradiation of microwave was stopped and simultaneously the decompression degree was decreased to 1.5 kPa, which was then maintained for 3 minutes. Subsequently, the decompression degree was returned to 7 kPa, and the hollow fiber membrane was heated by irradiation with microwave of an output of 0.5 kW for 10 minutes. Then, the irradiation of microwave was stopped, and the decompression degree was decreased to 0.7 kPa, which was maintained for 3 minutes. The decompression degree was again returned to 7 kPa, and the hollow fiber membrane bundle was heated by irradiation with microwave of an output of 0.2 kW for 8 minutes. Then, the irradiation of microwave was stopped, and the decompression degree was decreased to 0.5 kPa, which was maintained for 5 minutes, to thereby make the conditioning of the hollow fiber membrane bundle. Thus, the drying step was completed. In this drying step, the highest temperature the surface of the hollow fiber membrane had was 65°C. The moisture content of the hollow fiber membrane bundle before dried was 330 mass %; that found after the completion of the first drying step, 34 mass %; that found after the completion of the second drying step, 15 mass %; and that found after the completion of the third drying step, 1.6 mass %. The inner diameter of the resultant hollow fiber membrane bundle was 199 μm, and the thickness of the membrane was 29 μm.

The resultant hollow fiber membrane bundle was regularly divided at 2.7 cm intervals in the lengthwise direction, to obtain 10 portions thereof, and 1 g of the hollow fiber membrane in a dried state was weighed from each of the portions so as to determine the amount of hydrogen peroxide contained therein. The amounts of hydrogen peroxide in all the portions were of low levels, and thus, this hollow fiber membrane bundle was found to be stable. The measured values of hydrogen peroxide are shown in Tables 1 and 2.

A blood purifier was fabricated, using the obtained hollow fiber membrane bundle, so as to carry out a leak test. As a result, there was observed no failure in adhesion due to the sticking of the hollow fiber membranes to one another. The blood purifier was filled with RO water, and then was irradiated with γ-rays at an absorbed dose of 25 kGy for a crosslinking treatment. After the irradiation with γ-rays, the hollow fiber membranes were cut out of the blood purifier, and then were subjected to an eluation test. As a result, the amount of eluting PVP was 5 ppm, and the maximum of the amount of eluting hydrogen peroxide was 2 ppm, both of which were levels of no problem. Further, the storage stability of the hollow fiber membrane bundle obtained in this Example was sufficient, since the maximum of the UV absorbance (220 to 350 nm) of the hollow fiber membrane bundle found after the storage thereof for one year was 0.06, which was below 0.10 as a reference value, according to the Approval Standard for Dialysis-type Artificial Kidney Apparatus.

Each of the blood purifiers was filled with a compressed air under a pressure of 0.1 MPa, and some of the blood purifiers which passed the leak tests, each showing a pressure drop of not higher than 30 mmAq for 10 seconds, were used for the subsequent tests. The hollow fiber membrane bundle was removed from each of the blood purifiers, and the outer surface thereof was observed with a microscope. As a result, no defect such as a flaw or the like was observed. Further, fresh bovine blood admixed with citric acid was allowed to pass through the blood purifier at a flow rate of 200 mL/minute and at a filtering rate of 10 mL/minutes. As a result, the leakage of red blood cells was not observed. The results of the analyses are shown in Table 3.

(Comparative Example 1)

A hollow fiber membrane bundle was obtained in the same manner as in Example 1, except that poly(vinylpyrrolidone) containing 500 ppm of hydrogen peroxide was used as a raw material, that the kneading/dissolving temperature was set at 85°C, that the interiors of the raw material-supplying system and the dissolution tank were not replaced with nitrogen gases, and that the hollow fiber membrane bundle was dried by irradiation with microwave under an atmospheric pressure. The hollow fiber membrane bundle was irradiated with microwave of an output of 2 kW until the moisture

content of the hollow fiber membrane bundle reached 65 mass %. After that, the hollow fiber membrane bundle was irradiated with microwave of an output of 0.8 kW until the moisture content of the hollow fiber membrane bundle reached 0.5 mass %. Further, a dehumidifying air (of a humidity of 10% or lower) was fed from the lower side of the hollow fiber membrane bundle to the upper side thereof at an air velocity of 8 m/second during a period of time from the drying-starting time to the drying-completing time. The highest temperature the hollow fiber membrane bundle had during the drying step was 65°C. The characteristics of the resultant hollow fiber membrane bundle and the resultant blood purifier are shown in Tables 1 and 2. The amount of eluting hydrogen peroxide of the hollow fiber membrane bundle of this Comparative Example was of high level, and the variation in the amount of eluting hydrogen peroxide was large in each of the sampling sites of the bundle, and thus, the quality of this hollow fiber membrane bundle was low. The storage stability of this hollow fiber membrane bundle was also inferior because of the large amount of eluting hydrogen peroxide. The maximum of the UV absorbance (220 to 350 nm) of this hollow fiber membrane bundle could not be maintained below 0.10 which was a reference value according to the Approval Standard for Dialysis-type Artificial Kidney Apparatus, after the storage of about 8 months. The results are shown in Tables 1, 2 and 3.

(Comparative Example 2)

A hollow fiber membrane bundle and a blood purifier were obtained in the same manners as in Comparative Example 1, except that the Froude number and the Reynolds number in the dissolution of poly(vinylpyrrolidone) were 1.7 and 260, respectively, and that the washing of the hollow fiber membrane bundle was not done. In this Comparative Example, because of too large Froude number and too large Reynold's number in the dissolution of poly(vinylpyrrolidone), the raw materials flied and spread in the tank and adhered to the wall of the tank; or undesirably, bubble were involved into the solution which was being dissolved. The characteristics of the resultant hollow fiber membrane bundle and the resultant blood purifier are shown in Tables 1 and 2. The amounts of hydrogen peroxide and poly(vinylpyrrolidone) eluting from the hollow fiber membrane bundle obtained in this Comparative Example were of high levels, as well as Comparative Example 1, and the variation in the eluting amount of hydrogen peroxide was large in each of the sampling sites. Further, the storage stability of this hollow fiber membrane bundle was inferior because of the large amount of eluting hydrogen peroxide. The maximum of the UV absorbance (220 to 350 nm) of this hollow fiber membrane bundle could not be maintained below 0.10 which was a reference value according to the Approval Standard for Dialysis-type Artificial Kidney Apparatus, after the storage of about 6 months. The results are shown in Tables 1, 2 and 3.

(Example 2)

Polyethersulfone (Sumika-Excel(R) 4800P, manufactured by Sumika Chemtex Co., Ltd.) (1 mass part), poly (vinylpyrrolidone) (Colidone(R) K-90, manufactured by BASF) (0.21 mass parts) and DMAc (1.5 mass parts) were kneaded with a twin-screw type kneading machine. The knead mixture was introduced into a stirring type dissolution tank charged with DMAc (2.57 mass parts) and water (0.28 mass parts), and the mixture was stirred and dissolved for 3 hours. The mixture was kneaded and dissolved while the tank was being cooled so that the internal temperature did not exceed 30°C. Then, a vacuum pump was used to decompress the interior of a system to -700 mmHg, and the system was immediately sealed so as not to change the composition of the membrane-forming solution due to the evaporation of the solvent or the like, and the system was left to stand for 10 minutes. This operation was repeated three times to degas the membrane-forming solution. In this regard, poly(vinylpyrrolidone) containing 100 ppm of hydrogen peroxide was used. The supply tank and the dissolution tank in the raw material-supply system were replaced with nitrogen gases. The Froude number and the Reynolds number in the dissolution were 1.1 and 120, respectively. The resultant membrane-forming solution was allowed to pass through a two-staged filter (15 $\mu$m and 15 $\mu$m). This solution was then injected from tube-in-orifice nozzles heated to 70°C, concurrently with an aqueous solution of 50 mass % of DMAc of 50°C as a hollow portion-forming material which had been previously degassed under a reduced pressure of -700 mmHg for 2 hours. The strand of the injected solutions was allowed to pass through an air gap with a length of 350 mm, sealed from an external atmosphere by a spinning tube, and was then coagulated in water of 60°C. The width of the nozzle slits of the tube-in-orifice nozzles was 45 $\mu$m on average, maximum 45.5 $\mu$m and minimum 44.5 $\mu$m. The ratio of the maximum value to the minimum value of the slit width was 1.02, and the draft ratio was 1.2. The hollow fiber membrane bundle removed from the coagulation bath was allowed to pass through a water washing bath of 85°C for 45 seconds to remove excesses of the solvent and poly(vinylpyrrolidone). After that, the hollow fiber membrane bundle was wound up. The bundle of about 10,000 hollow fiber membranes was wrapped in a polyethylene film which was the same one as that used in Example 1, and then was immersed in an aqueous solution of 40 vol % of isopropanol of 30°C for 30 minutes. This operation was repeated twice for washing.

The obtained wet hollow fiber bundle was introduced into a microwave-irradiation type drier in which a reflecting plate was provided in its oven so as to enable even heating. Then, the hollow fiber membrane bundle was dried under the following conditions: the hollow fiber bundle was heated by irradiation with microwave of an output of 1.5 kW under

a reduced pressure of 7 kPa for 30 minutes; then, the irradiation of microwave was stopped and simultaneously the decompression degree was decreased to 1.5 kPa; and the hollow fiber membrane bundle was maintained under these conditions for 3 minutes. Subsequently, the decompression degree was returned to 7 kPa, and the hollow fiber membrane was heated by irradiation with microwave of an output of 0.5 kW for 10 minutes. Then, the irradiation of microwave was stopped, and the decompression degree was decreased to 0.7 kPa, which was maintained for 3 minutes. The decompression degree was returned to 7 kPa, and the hollow fiber membrane was heated by irradiation with microwave of an output of 0.2 kW for 8 minutes. Then, the irradiation of microwave was stopped, and the decompression degree was decreased to 0.5 kPa, which was maintained for 5 minutes, to thereby make the conditioning of the hollow fiber membrane bundle. Thus, the drying of the bundle was completed. In this drying step, the highest temperature the surface of the hollow fiber membrane had was 65°C. The moisture content of the hollow fiber membrane before dried was 315 mass %; that found after the completion of the first drying step, 29 mass %; that found after the completion of the second drying step, 16 mass %; and that found after the completion of the third drying step, 2.8 mass %. The rollers which changed the fiber path during the spinning step were all planished at their surfaces, and the stationary guides were all mat-finished at their surfaces. The inner diameter of the resultant hollow fiber membrane bundle was 200 μm, and the thickness of the membrane was 27 μm.

The resultant hollow fiber membrane bundle was regularly divided at 2.7 cm intervals, to obtain 10 portions thereof, and 1 g of the hollow fiber membrane bundle in a dried state was weighed from each of the portions so as to determine the amount of hydrogen peroxide eluted therefrom. The amounts of hydrogen peroxide eluted from all the portions were of low levels, and thus, this hollow fiber membrane bundle was stable in storage. The measured values of hydrogen peroxide are shown in Tables 1 and 2.

A blood purifier was fabricated, using the obtained hollow fiber membrane bundle, so as to carry out a leak test. As a result, there was observed no failure in adhesion due to the sticking of the hollow fiber membranes to one another. The blood purifier was filled with RO water, and then was irradiated with γ-ray at an absorbed dose of 25 kGy for a crosslinking treatment. After the irradiation with γ-ray, the hollow fiber membrane bundle was cut out of the blood purifier, and then was subjected to an eluation test. As a result, the amount of eluting PVP was 6 ppm, and the maximum of the amounts of eluting hydrogen peroxide was 2 ppm, both of which were levels of no problem. Further, the storage stability of the hollow fiber membrane bundle obtained in this Example was sufficient, since the maximum of the UV absorbance (220 to 350 nm) of the hollow fiber membrane bundle found after the storage thereof for one year was 0.06, which was maintained below 0.10 as a reference value according to the Approval Standard for Dialysis-type Artificial Kidney Apparatus. The hollow fiber membrane bundle was removed from the blood purifier, and the outer surface thereof was observed with a microscope. As a result, no defect such as flaws or the like was observed. In the blood leak test using bovine, no leakage of red blood cells was observed. The results of the analyses are shown in Table 3.

(Comparative Example 3)

Polyethersulfone (Sumika-Excel(R) 5200P, manufactured by Sumika Chemtex Co., Ltd.) (16 mass %), poly (vinylpyrrolidone) (Colidone(R) K-90, manufactured by BASF) (5.4 mass %), dimethylacetoamide (DMAc) (75.6 mass %) and water (3 mass %) were directly charged in a dissolution tank equipped with a stirrer, and the mixture was dissolved at 75°C. The Froude number and the Reynod's number in the dissolution were 1.0 and 120, respectively. Then, a vacuum pump was used to decompress the interior of a system to -500 mmHg, and the system was immediately sealed so as not to change the composition of the membrane-forming solution due to the evaporation of the solvent or the like, and the system was left to stand in this state for 15 minutes. This operation was repeated three times to degas the membrane-forming solution. In this regard, poly(vinylpyrrolidone) containing 450 ppm of hydrogen peroxide was used. The supply tank and the dissolution tank in the raw material-supply system were not replaced with nitrogen gases. The resultant membrane-forming solution was allowed to pass through a filter (30 μm). This solution was then injected from tube-in-orifice nozzles heated to 60°C, concurrently with an aqueous solution of 30 mass % of DMAc of 50°C as a hollow portion-forming material which had been previously degassed under a reduced pressure of -700 mmHg for 2 hours. The strand of the injected solutions was allowed to pass through a drying section with a length of 600 mm, sealed from an external atmosphere by a spinning tube, and was then coagulated in an aqueous DMAc solution of 60°C. The width of the nozzle slits of the tube-in-orifice nozzles was 100 μm on average, maximum 110 μm and minimum 90 μm. The ratio of the maximum value to the minimum value of the slit width was 1.22, and the draft ratio was 2.4. The obtained hollow fiber membrane bundle was allowed to pass through a water washing bath of 40°C for 45 seconds to remove excesses of the solvent and poly(vinylpyrrolidone). After that, the hollow fiber membrane bundle in a wet state was wound up, and dried in the same manner as in Comparative Example 1. The inner diameter of the resultant hollow fiber membrane bundle was 197 μm, and the thickness of the membrane was 29 μm. The amounts of hydrogen peroxide and poly (vinylpyrrolidone) eluting from the hollow fiber membrane bundle of this Comparative Example were of high levels, and the variation in the amount of eluting hydrogen peroxide in each of the sampling sites was large.

A blood purifier was fabricated, using the obtained hollow fiber membrane bundle. This blood purifier was not

subjected to a crosslinking treatment by irradiation with γ-ray which was done in Example 2. The hollow fiber membrane bundle was cut out from the blood purifier and subjected to an eluation test. As result, the eluting amount of PVP was 12 ppm, and the maximal eluting amount of hydrogen peroxide was 20 ppm. The hydrogen peroxide elution of the hollow fiber membrane bundle of this Comparative Example was large, and therefore, the storage stability thereof was inferior. This hollow fiber membrane bundle could not maintain the maximum UV absorbance (220 to 350 nm) below 0.10 as a reference value according to the Approval Standard for Dialysis-type Artificial Kidney Apparatus, after the storage thereof for about 3 months. Each of the blood purifiers was charged with a compressed air under a pressure of 0.1 MPa, and some blood purifiers, each showing a pressure decrease of 30 mmAq or less in 10 seconds, were used as modules to be tested. In blood leak tests using bovine blood, two out of 30 modules showed the leakage of red blood cells. This seemed to be attributed the occurrence of pin holes and/or tears of the hollow fiber membranes because of the small deviation in thickness and too large diameters of the pores of the outer surface of the hollow fiber membranes. The results are shown in Tables 1, 2 and 3.

(Example 3)

A membrane-forming solution comprising polysulfone (P-3500, manufactured by AMOCO) (18 mass %), poly (vinylpyrrolidone) (Colidone K-60, manufactured by BASF) (9 mass %), dimethylacetoamide (DMAc) (68 mass %) and water (5 mass %) was prepared in the same manner as in Example 2. The poly(vinylpyrrolidone) used contained 100 ppm of hydrogen peroxide. The resultant membrane-forming solution was allowed to pass through two-staged filter of 15 μm and 15 μm, and was then injected from tube-in-orifice nozzles heated to 40°C, concurrently with an aqueous solution of 55 mass % of DMAc of 60°C as a hollow portion-forming material which had been previously degassed. The strand of the injected solutions was allowed to pass through an air gap section with a length of 600 mm, sealed from an external atmosphere by a spinning tube, and was then coagulated in water of 50°C. The width of the nozzle slits of the tube-in-orifice nozzles was 60 μm on average, maximum 61 μm and minimum 59 μm. The ratio of the maximum value to the minimum value of the slit width was 1.03, and the draft ratio was 1.1. The hollow fiber membrane bundle was removed from the coagulation bath, and was allowed to pass through a water bath of 85°C for 45 seconds to thereby remove the solvent and an excess of the poly(vinylpyrrolidone), and then was wound up. A bundle of about 10,000 hollow fiber membranes thus obtained was immersed in pure water, and was washed in an autoclave at 121°C for one hour. Then, the same bundle was wrapped in a polyethylene film which was the same one as used in Example 1. After that, the bundle was packed in a container being replaced with a nitrogen gas and was subjected to a crosslinking treatment by irradiation with γ-ray at an absorbed dose of 25 kGy. The maximum hydrogen peroxide elution from the bundle found before the crosslinking treatment was 2 ppm. Subsequentially, the bundle was dried in the same manner as in Example 1. The rollers for changing the fiber path during the spinning step were planished at their surfaces, and the stationary guides were mat-finished at their surfaces. The resultant hollow fiber membrane bundle had an inner diameter of 201 μm, and the thickness of the membrane was 43 μm. As is apparent from Tables 1 and 2, the hydrogen peroxide elutions were of low levels and stable in all the sites.

A blood purifier was fabricated, using the obtained hollow fiber membrane bundle. The blood purifier was subjected to a leak test, with the result that no failure in adhesion attributed to the sticking of the hollow fiber membranes was observed. The blood purifier was filled with RO water, and then, the hollow fiber membrane bundle was cut out of the blood purifier and was subjected to an eluation test. As a result, the PVP elution was 7 ppm, and the maximum hydrogen peroxide elution was 3 ppm, which were levels of no problem. Each of the obtained blood purifiers was charged with a compressed air under a pressure of 0.1 MPa, and some of the blood purifiers which showed pressure drops of not higher than 30 mmAq for 10 seconds were used for the subsequent tests. The hollow fiber membrane bundle was removed from the blood purifier, and the outer surface thereof was observed with a microscope. As a result, no defect such as a flaw or the like was observed. Further, fresh bovine blood admixed with citric acid was allowed to pass through the blood purifier at a flow rate of 200 mL/minute and at a filtering rate of 10 mL/minute, with the result of no leakage of red blood cells. The amount of endotoxin filtered from the outside of the hollow fiber membranes to the inner side thereof was below the limit for detection, having a level of no problem. The storage stability of the hollow fiber membrane bundle obtained in this Example was sufficient, and the maximum of the UV absorbance (220 to 350 nm) of the follow fiber membrane bundle found after the storage thereof for one year was 0.06, and was found to be kept below a reference value of 0.1 according to the Approval Standard for Dialysis-type Artificial Kidney Apparatus. As a result of the leak test, no failure in adhesion attributed to the sticking of the hollow fiber membranes was observed. The results are shown in Table 3.

(Example 4)

A membrane-forming solution comprising polysulfone (P-1700, manufactured by AMOCO) (17 mass %), poly (vinylpyrrolidone) (Colidone K-60, manufactured by BASF) (5 mass %), dimethylacetoamide (DMAc) (73 mass %) and

water (5 mass %) was prepared in the same manner as in Example 2. The poly(vinylpyrrolidone) used contained 120 ppm of hydrogen peroxide. The resultant membrane-forming solution was allowed to pass through a two-staged filter of 15 μm and 15 μm, and was then injected from tube-in-orifice nozzles heated to 40°C, concurrently with an aqueous solution of 35 mass % of DMAc of 60°C as a hollow portion-forming material which had been previously degassed. The strand of the injected solutions was allowed to pass through an air gap section with a length of 600 mm, sealed from an external atmosphere by a spinning tube, and was then coagulated in water of 50°C. The width of the nozzle slits of the tube-in-orifice nozzles was 60 μm on average, maximum 61 μm and minimum 59 μm. The ratio of the maximum value to the minimum value of the slit width was 1.03, and the draft ratio was 1.1. The hollow fiber membrane bundle was removed from the coagulation bath, and was allowed to pass through a water bath of 85°C for 45 seconds to thereby remove the solvent and an excess of the poly(vinylpyrrolidone), and then was wound up. A bundle of about 10,000 hollow fiber membranes thus obtained was immersed in pure water, and was washed in an autoclave at 121°C for one hour.

After the washing, the bundle in a wet state was wrapped in a polyethylene film. After that, such wet hollow fiber membrane bundles wrapped in the films were set on two-staged turn tables (48 hollow fiber membrane bundles on each turn table) in a drying apparatus and were irradiated with microwave of an output of 12 kW for a heat treatment for 15 minutes, while the internal atmosphere of the drying apparatus being decompressed to 7 kPa. Then, the microwave irradiation was stopped, and the decompression degree was decreased to 1 kPa, and this condition was maintained for 3 minutes to evaporate the moistures from the bundles. Next, the decompression degree was returned to 7 kPa, and simultaneously, the bundles were irradiated with microwave of an output of 3.5 kW for 7 minutes for a heat treatment. After the heating, the microwave irradiation was stopped, and the decompression degree was decreased to 0.8 kPa, and this condition was maintained for 3 minutes. Again, the decompression degree was returned to 7 kPa, and the irradiation with microwave of an output of 2.5 kW was restarted and continued for 5 minutes. After that, the microwave irradiation was stopped, and the decompression degree was decreased to 0.5 kPa. This condition was maintained for 7 minutes to dry the bundles. Further, the bundles were treated in an air drier at 35°C for 3 hours, so as to uniform the moisture contents of the bundles. The moisture contents of the bundles found before the drying by irradiation with microwave were 338 mass %; those found after the completion of the treatment in the first step, 277 mass %; those found after the completion of the treatment in the second step, 14 mass %; those found after the completion of the treatment in the third step, 5.5 mass %; and those found after the completion of the air-drying, 1.7 mass %. The highest temperature the hollow fiber membrane bundle had during the drying treatment was 56°C. The rollers for changing the fiber path during the spinning step were planished at their surfaces, and the stationary guides were mat-finished at their surfaces. The resultant hollow fiber membrane bundle had an inner diameter of 200 μm, and the thickness of the membrane was 43 μm. As is apparent from Tables 1 and 2, the hydrogen peroxide elutions were of low levels and stable in all the sites of the hollow fiber membrane bundle.

A blood purifier was fabricated, using the obtained hollow fiber membranes. The blood purifier was subjected to a leak test, with the result that no failure in adhesion attributed to the sticking of the hollow fiber membranes was observed. The blood purifier was filled with RO water and subjected to a crosslinking treatment by irradiation with γ-ray at an absorbed dose of 25 kGy.

After the irradiation with γ-ray, the hollow fiber membrane bundle was cut out of the blood purifier and subjected to an eluation test. As a result, the PVP elution was 7 ppm, and the maximum hydrogen peroxide elution was 2 ppm, which were levels of no problem. Each of the blood purifiers as obtained above was charged with a compressed air under a pressure of 0.1 MPa, and some of the blood purifiers which showed pressure drops of not higher than 30 mmAq for 10 seconds were used for the subsequent tests. The hollow fiber membrane bundle was removed from the blood purifier, and the outer surface thereof was observed with a microscope. As a result, no defect such as a flaw or the like was observed. Further, fresh bovine blood admixed with citric acid was allowed to pass through the blood purifier at a flow rate of 200 mL/minute and at a filtering rate of 10 mL/minute, with the result of no leakage of red blood cells. The amount of endotoxin filtered from the outside of the hollow fiber membranes to the inner side thereof was below the limit for detection, having a level of no problem. The storage stability of the hollow fiber membrane bundle obtained in this Example was sufficient, and the maximum of the UV absorbance (220 to 350 nm) of the hollow fiber membrane bundle found after the storage thereof for one year was 0.07, and was found to be kept below a reference value of 0.1 according to the Approval Standard for Dialysis-type Artificial Kidney Apparatus. The results are shown in Table 3.

Hitherto, there has been reported no method for controlling the qualities of hollow fiber membrane bundles by paying concentrated attentions to the behavior of hydrogen peroxide. The qualities of hollow fiber membrane bundles are evaluated from many view points. For example, a hollow fiber membrane bundle is cut along its lengthwise direction into portions with lengths of 27 cm, and each portion thereof is divided at regular 2.7 cm intervals, so as to measure the hydrogen peroxide eluting amounts from the respective sites of the intervals. A range A is determined based on the maximum eluting amount and the minimum eluting amount, and an average eluting amount is calculated by averaging the hydrogen peroxide elutions from the respective sites. The degree of variation in quality is defined by a maximum value B of a range between the maximum or minimum eluting amount and the average eluting amount. Fig. 1 shows the state of variation in the quality of Example 1. The degree of variation in the quality of Comparative Example 1 can

be similarly determined. The values thus calculated are indicated in Table 2.

Fig. 2 shows a graph of the plotting of relationships between the hydrogen peroxide eluting amounts (maximum values) from the respective sites of the hollow fiber membrane bundles and the degrees of variation in the qualities of the respective sites of the hollow fiber membrane bundles (the maximum ranges from the average eluting amounts). As the hydrogen peroxide eluting amount becomes larger, the range of the hydrogen peroxide eluting amounts from the respective 10 divided sites of the hollow fiber membrane bundle tends to increase. When the hydrogen peroxide eluting amounts from the respective sites within the hollow fiber membrane bundle are variable, such variations give some influences on the properties and function of the hollow fiber membrane bundle, which is undesirable for the controlling of the quality of the hollow fiber membrane bundle. When the maximum value of the hydrogen peroxide eluting amount is not larger than 5 ppm, it is found to be significant in critical view, in the senses that the variation of the hydrogen peroxide eluting amount can be inhibited and that the stability of the storage of the hollow fiber membrane bundle and the blood purifier comprising the same can be maintained over a long period of time.

Fig. 3 shows a graph indicating the changes of the UV absorbances of the hollow fiber membrane bundles of which the poly(vinylpyrrolidone) eluting amounts were suppressed to 10 ppm or less and of which the hydrogen peroxide eluting amounts were suppressed to 5 ppm or less, when these bundles were stored for one year. The UV absorbances of the hollow fiber membrane bundles of which the hydrogen peroxide eluting amounts were suppressed to 5 ppm or less can be suppressed to 0.1 or less, even when such bundles have been stored over a long period of time. Therefore, it is confirmed that suppressing the hydrogen peroxide content of the hollow fiber membrane bundle to 5 ppm or less markedly contributes to the stability of the quality of the hollow fiber membrane bundle.

[Table 1]

| Table 1: Hydrogen Peroxide-Eluting Amount (ppm) | | | | | | | |
|---|---|---|---|---|---|---|---|
| Site | Ex. 1 | Ex. 2 | Ex. 3 | Ex. 4 | C.Ex. 1 | C.Ex. 2 | C.Ex. 3 |
| 1 | 2 | 2 | 3 | 5 | 8 | 11 | 15 |
| 2 | 2 | 1 | 1 | 2 | 1 | 3 | 2 |
| 3 | 1 | 1 | 2 | 2 | 6 | 4 | 10 |
| 4 | 1 | 1 | 1 | 3 | 5 | 8 | 4 |
| 5 | ND | ND | ND | 1 | 2 | 10 | 13 |
| 6 | ND | ND | ND | ND | 4 | 12 | 10 |
| 7 | ND | ND | ND | ND | 3 | 10 | 3 |
| 8 | 1 | ND | 2 | 1 | 6 | 4 | 10 |
| 9 | 2 | 2 | ND | ND | 2 | 7 | 13 |
| 10 | 2 | 1 | 1 | 2 | 8 | 8 | 10 |
| Abbreviation ND means "not detectable". | | | | | | | |

[Table 2]

| Table 2: Hydrogen Peroxide- and PVP-Eluting Amounts (ppm) | | | | | | | |
|---|---|---|---|---|---|---|---|
| | Ex. 1 | Ex. 2 | Ex. 3 | Ex. 4 | C.Ex. 1 | C.Ex. 2 | C. Ex . 3 |
| Max. eluting amount | 2 | 2 | 3 | 5 | 8 | 12 | 15 |
| Av. eluting amount | 1.1 | 0.8 | 1.0 | 1.6 | 4.5 | 7.7 | 9.0 |
| Min. eluting amount | 0 | 0 | 0 | 0 | 1 | 3 | 2 |
| Max. range from av. eluting amount | 1.1 | 1.2 | 2.0 | 3.4 | 3.5 | 6.5 | 7.0 |
| Max. range of eluting amount | 2 | 2 | 3 | 5 | 7 | 9 | 13 |
| PVP eluting amount | 8 | 6 | 7 | 7 | 8 | 8 | 15 |

[Table 3]

| | Ex.1 | Ex.2 | Ex.3 | Ex.4 | C.Ex. 1 | C.Ex.2 | C.Ex.3 |
|---|---|---|---|---|---|---|---|
| Hydrogen peroxide content in PVP as a raw material (ppm) | 130 | 100 | 100 | 120 | 500 | 500 | 450 |
| Kneading during preparation of a membrane-forming solution | Done | Done | Done | Done | Done | Not | Not |
| Membrane-forming solution-dissolving temp. (°C) | 35 | 30 | 30 | 30 | 75 | 75 | 75 |
| Replacing with inert gas | Done | Done | Done | Done | Not | Not | Not |
| Froude number | 1.0 | 1.1 | 1.1 | 1.1 | 1.0 | 1.7 | 1.0 |
| Reynolds number | 100 | 120 | 120 | 120 | 100 | 260 | 120 |
| Highest temp. (°C) of hollow fiber membrane bundle in drying step | 65 | 65 | 65 | 56 | 65 | 65 | 65 |
| Moisture content (mass %) of hollow fiber membrane bundle | 1.6 | 2.8 | 1.6 | 1.7 | 0.5 | 0.5 | 0.5 |
| PVP eluting amount (ppm) | 8 | 6 | 7 | 7 | 8 | 8 | 15 |
| Water permeability ($ml/m^2/hr/mmHg$) | 510 | 342 | 602 | 290 | 505 | 508 | 488 |
| Burst pressure (MPa) | 0.6 | 0.6 | 0.7 | 0.6 | 0.6 | 0.6 | 0.3 |
| Deviation in thickness | 0.71 | 0.90 | 0.82 | 0.88 | 0.71 | 0.71 | 0.41 |
| Leakage of blood (number bundles) | of 0 | 0 | 0 | 0 | 0 | 0 | 2 |
| Storage stability (max. value of UV absorbance) | 0.04 | 0.05 | 0.05 | 0.06 | 0.15 | 0.19 | 0.23 |
| Storage stability (property in practical use) | O | O | O | O | X | X | X |
| Insoluble matter content (mass %) | 15 | 17 | 17 | 18 | 15 | 16 | 0 |

INDUSTRIAL APPLICABILITY

A polysulfone permselective hollow fiber membrane bundle according to the present invention is suppressed in hydrogen peroxide elution, and therefore, the deterioration of poly(vinylpyrrolidone) or the like induced by hydrogen peroxide can be inhibited, when the hollow fiber membrane bundle is stored over a long period of time. Therefore, the maximum value of the UV absorbance of the hollow fiber membrane bundle (at a wavelength of 220 to 350 nm) can be maintained below 0.10 which is a reference value according to the Approval Standard for Dialysis-type Artificial Kidney Apparatus, even when the hollow fiber membrane bundle is stored over a long period of time. Accordingly, this hollow fiber membrane bundle is suitable for use in a hemodialytic hollow fiber type blood purifier or the like which is required to have a high water permeability for use in the treatment of renal failure.
According to a manufacturing process of the present invention, the above hollow fiber membrane bundle can be economically and reliably manufactured.

**Claims**

**1.** A polysulfone permselective hollow fiber membrane bundle which contains poly(vinylpyrrolidone) and which shows a hydrogen peroxide-eluting amount of 5 ppm or less, when subjected to an eluation test regulated in the Approval Standard for Dialysis-type Artificial Kidney Apparatus.

**2.** A polysulfone permselective hollow fiber membrane bundle according to claim 1, which shows a hydrogen peroxide concentration of 5 ppm or less in every one of eluates from 10 portions into which the hollow fiber membrane bundle is divided in the lengthwise direction, when each of said portions is subjected to an eluation test regulated in the Approval Standard for Dialysis-type Artificial Kidney Apparatus.

3. A polysulfone permselective hollow fiber membrane bundle according to claim 1 or 2, wherein, when said hollow fiber membrane bundle is subjected to an eluation test regulated in the Approval Standard for Dialysis-type Artificial Kidney Apparatus, the amount of poly(vinylpyrrolidone) eluted from said hollow fiber membrane bundle is 10 ppm or less.

4. A polysulfone permselective hollow fiber membrane bundle according to any of claims 1 to 3, wherein said poly (vinylpyrrolidone) is crosslinked.

5. A polysulfone permselective hollow fiber membrane bundle according to any of claims 1 to 4, wherein said poly (vinylpyrrolidone) is insolubilized.

6. A polysulfone permselective hollow fiber membrane bundle according is any of claims 1 to 5, wherein, when said hollow fiber membrane bundle is subjected to an equation test regulated in the Approval Standard for Dialysis-type Artificial Kidney Apparatus, after having been scored at root temperature for one year, the maximum value of the UV absorbance of an eluate from the hollow fiber membrane bundle at a wavelength of 220 to 350 nm is 0.10 or less.

7. A process for manufacturing a polysulfone permselective hollow fiber membrane bundle, said process comprising the step of spinning a solution which contains a polysulfone polymer, poly(vinylpyrrolidone) and a solvent, wherein the content of hydrogen peroxide in said poly(vinylpyrrolidone) is 300 ppm or less, which solution is prepared by

a) kneading poly(vinylpyrrolidone) and a solvent or a polysulfone polymer, poly(vinylpyrrolidone) and a solvent under an atmosphere replaced by inert gas;
b) feeding the raw materials into a dissolution tank whose atmosphere is previously replaced by an inert gas and dissolving them at a temperature from 5 to 70 °C.

8. A process according to claim 7, including the steps of previously kneading said components, and stirring and dissolving the resultant knead mixture in the dissolution tank.

9. A process according to claim 7, wherein said components are dissolved in a dissolution tank equipped with a kneading device.

10. A process according to claim 8 or 9, wherein the kneading and/or dissolving of at least poly(vinylpyrrolidone) is carried out under a nitrogen atmosphere.

11. A process according to any of claims 9 to 10, wherein the dissolution is carried out under conditions of a Froude number of 0.7 to 1.3 and a Reynolds number of 50 to 250.

12. A process according to any of claims 7 to 11, including the step of drying the hollow fiber membrane bundle by irradiating the same bundle with microwave under a reduced pressure.

13. A process according to claim 12, wherein said drying is carried out by irradiating the hollow fiber membrane bundle with microwave having a low output of 20 kW or less under a reduced pressure of 0.1 to 20 kPa.

14. A process according to claim 12 or 13, wherein said drying is carried out while the output of microwave is being sequentially decreased in accordance with a decrease in the moisture content of the hollow fiber membrane bundle.

15. A process according to any of claims 7 to 14, comprising the step of subjecting, to a crosslinking treatment, a hollow fiber membrane bundle which shows a hydrogen peroxide concentration of 3 ppm or less in every one of eluates from 10 portions into which the hollow fiber membrane bundle is divided in the lengthwise direction, when each of said portions is subjected to an eluation test regulated in the Approval Standard for Dialysis-type Artificial Kidney Apparatus.

16. A blood purifier packed with a polysulfone permselective hollow fiber membrane bundle defined in any of claims 1 to 6.

17. A blood purifier according to claim 16, wherein, when said blood purifier is subjected to an eluation test regulated in the Approval Standard for Dialysis-type Artificial Kidney Apparatus, after having been scored at room temperature for one year, the maximum value of the UV absorbance of an eluate therefrom at a wavelength of 220 to 350 nm is 0.10 or less.

## Patentansprüche

1. Ein Bündel von permselektiven Polysulfon-Hohlfasermembranen, welches Poly(vinylpyrrolidon) enthält und eine Wasserstoffperoxid-Elutionsmenge von 5 ppm oder weniger aufweist, wenn es einem Elutionstest unterzogen wird, der in der Zulassungsnorm für künstliche Nierengeräte vom Dialysetyp geregelt ist.

2. Ein Bündel von permselektiven Polysulfon-Hohlfasermembranen nach Anspruch 1, welches eine Wasserstoffperoxid-Konzentration von 5 ppm oder weniger in jedem der Eluate aus 10 Abschnitten, in die das Bündel von Hohlfasermembranen in Längsrichtung unterteilt wird, aufweist, wenn jeder der Abschnitte einem Elutionstest unterzogen wird, der in der Zulassungsnorm für künstliche Nierengeräte vom Dialysetyp geregelt ist.

3. Ein Bündel von permselektiven Polysulfon-Hohlfasermembranen nach Anspruch 1 oder 2, wobei, wenn das Bündel von Hohlfasermembranen einem Elutionstest unterzogen wird, der in der Zulassungsnorm für künstliche Nierengeräte vom Dialysetyp geregelt ist, die Menge an aus dem Bündel von Hohlfasermembranen eluiertem Poly(vinylpyrrolidon) 10 ppm oder weniger beträgt.

4. Ein Bündel von permselektiven Polysulfon-Hohlfasermembranen nach einem der Ansprüche 1 bis 3, wobei das Poly(vinylpyrrolidon) vernetzt ist.

5. Ein Bündel von permselektiven Polysulfon-Hohlfasermembranen nach einem der Ansprüche 1 bis 4, wobei das Poly(vinylpyrrolidon) unlöslich gemacht ist.

6. Ein Bündel von permselektiven Polysulfon-Hohlfasermembranen nach einem der Ansprüche 1 bis 5, wobei, wenn das Bündel von Hohlfasermembranen einem Elutionstest unterzogen wird, der in der Zulassungsnorm für künstliche Nierengeräte vom Dialysetyp geregelt ist, nachdem es bei Raumtemperatur für ein Jahr gelagert wurde, der Maximalwert der UV-Extinktion eines Eluats aus dem Bündel von Hohlfasermembranen bei einer Wellenlänge von 220 bis 350 nm 0,10 oder weniger beträgt.

7. Ein Verfahren zur Herstellung eines Bündels von permselektiven Polysulfon-Hohlfasermembranen, wobei das Verfahren den Schritt des Spinnens einer Lösung, die ein Polysulfonpolymer, Poly(vinylpyrrolidon) und ein Lösungsmittel enthält, umfasst, wobei der Gehalt an Wasserstoffperoxid in dem Poly(vinylpyrrolidon) 300 ppm oder weniger beträgt, wobei die Lösung hergestellt wird durch a) Kneten von Poly(vinylpyrrolidon) und einem Lösungsmittel oder von einem Polysulfonpolymer, Poly(vinylpyrrolidon) und einem Lösungsmittel unter einer durch Inertgas ersetzten Atmosphäre; b) Zufuhr der Ausgangsmaterialien in einen Lösungsbehälter, dessen Atmosphäre zuvor durch ein Inertgas ersetzt wird, und Lösen derselben bei einer Temperatur von 5 bis 70°C.

8. Ein Verfahren nach Anspruch 7, welches die Schritte des vorangehenden Knetens der Bestandteile und des Rührens und Lösens des resultierenden Knetgemisches in dem Lösungsbehälter beinhaltet.

9. Ein Verfahren nach Anspruch 7, wobei die Bestandteile in einem mit einer Knetvorrichtung ausgestatteten Lösungsbehälter gelöst werden.

10. Ein Verfahren nach Anspruch 8 oder 9, wobei das Kneten und/oder Lösen von zumindest Poly(vinylpyrrolidon) unter einer Stickstoffatmosphäre durchgeführt wird.

11. Ein Verfahren nach einem der Ansprüche 8 bis 10, wobei das Lösen unter Bedingungen einer Froude-Zahl von 0,7 bis 1,3 und einer Reynolds-Zahl von 50 bis 250 durchgeführt wird.

12. Ein Verfahren nach einem der Ansprüche 7 bis 11, welches den Schritt des Trocknens des Bündels von Hohlfasermembranen durch Bestrahlen desselben Bündels mit Mikrowelle unter einem verminderten Druck beinhaltet.

13. Ein Verfahren nach Anspruch 12, wobei das Trocknen durch Bestrahlen des Bündels von Hohlfasermembranen mit Mikrowelle mit einer geringen Leistung von 20 kW oder weniger unter einem verminderten Druck von 0,1 bis 20 kPa durchgeführt wird.

14. Ein Verfahren nach Anspruch 12 oder 13, wobei das Trocknen durchgeführt wird, während die Mikrowellen-Leistung stufenweise entsprechend einer Abnahme des Feuchtigkeitsgehalts des Bündels von Hohlfasermembranen verringert wird.

**15.** Ein Verfahren nach einem der Ansprüche 7 bis 14, umfassend den Schritt des Unterziehens einer Vemetzungsbehandlung eines Bündels von Hohlfasermembranen, welches eine Wasserstoffperoxid-Konzentration von 3 ppm oder weniger in jedem der Eluate aus 10 Abschnitten, in die das Bündel von Hohlfasermembranen in Längsrichtung unterteilt wird, aufweist, wenn jeder der Abschnitte einem Elutionstest unterzogen wird, der in der Zulassungsnorm für künstliche Nierengeräte vom Dialysetyp geregelt ist.

**16.** Ein Blutreiniger, gepackt mit einem in einem der Ansprüche 1 bis 6 definierten Bündel von permselektiven Polysulfon-Hohlfasermembranen.

**17.** Ein Blutreiniger nach Anspruch 16, wobei, wenn der Blutreiniger einem Elutionstest unterzogen wird, der in der Zulassungsnorm für künstliche Nierengeräte vom Dialysetyp geregelt ist, nachdem er bei Raumtemperatur für ein Jahr gelagert wurde, der Maximalwert der UV-Extinktion eines Eluats daraus bei einer Wellenlänge von 220 bis 350 nm 0,10 oder weniger beträgt.

## Revendications

**1.** Faisceau de membranes en fibres creuses permsélectives à base de polysulfone qui contient de la poly(vinylpyrrolidone) et qui présente une quantité d'élution de peroxyde d'hydrogène inférieure ou égale à 5 ppm, lorsqu'il est soumis à un essai d'élution défini dans la Norme d'approbation s'appliquant aux appareils de rein artificiel de type dialyse (Approval Standard for Dialysis-type Artificial Kidney Apparatus).

**2.** Faisceau de membranes en fibres creuses permsélectives à base de polysulfone selon la revendication 1, qui présente une concentration de peroxyde d'hydrogène inférieure ou égale à 5 ppm dans chacun des éluats des 10 parties en lesquelles le faisceau de membranes en fibres creuses se divise dans le sens de la longueur, lorsque chacune desdites parties est soumise à un essai d'élution défini dans la Norme d'approbation s'appliquant aux appareils de rein artificiel de type dialyse.

**3.** Faisceau de membranes en fibres creuses permsélectives à base de polysulfone selon la revendication 1 ou 2, dans lequel, lorsque ledit faisceau de membranes en fibres creuses est soumis à un essai d'élution défini dans la Norme d'approbation s'appliquant aux appareils de rein artificiel de type dialyse, la quantité de poly(vinylpyrrolidone) éluée à partir dudit faisceau de membranes en fibres creuses est inférieure ou égale à 10 ppm.

**4.** Faisceau de membranes en fibres creuses permsélectives à base de polysulfone selon l'une quelconque des revendications 1 à 3, dans lequel ladite poly(vinylpyrrolidone) est réticulée.

**5.** Faisceau de membranes en fibres creuses permsélectives à base de polysulfone selon l'une quelconque des revendications 1 à 4, dans lequel ladite poly(vinylpyrrolidone) est insolubilisée.

**6.** Faisceau de membranes en fibres creuses permsélectives à base de polysulfone selon l'une quelconque des revendications 1 à 5, dans lequel, lorsque ledit faisceau de membranes en fibres creuses est soumis à un essai d'élution défini dans la Norme d'approbation s'appliquant aux appareils de rein artificiel de type dialyse, après avoir été conservé à température ambiante pendant un an, la valeur maximale de l'absorbance UV d'un éluat du faisceau de membranes en fibres creuses à une longueur d'onde de 220 à 350 nm est inférieure ou égale à 0,10.

**7.** Procédé de fabrication d'un faisceau de membranes en fibres creuses permsélectives à base de polysulfone, ledit procédé comprenant l'étape de filage d'une solution qui contient un polymère de polysulfone, une poly(vinylpyrrolidone) et un solvant, dans lequel la teneur du peroxyde d'hydrogène dans ladite poly(vinylpyrrolidone) est inférieure ou égale à 300 ppm, laquelle solution est préparée en

a) malaxant de la poly(vinylpyrrolidone) et un solvant ou un polymère de polysulfone, de la poly(vinylpyrrolidone) et un solvant dans une atmosphère remplacée par un gaz inerte ;
b) introduisant les matières premières dans une cuve de dissolution dont l'atmosphère est préalablement remplacée par un gaz inerte et en les dissolvant à une température de 5 à 70 °C,

**8.** Procédé selon la revendication 7, comprenant les étapes consistant à malaxer préalablement lesdits composants, et à agiter et à dissoudre le mélange malaxé résultant dans la cuve de dissolution.

**9.** Procédé selon la revendication 7, dans lequel lesdits composants sont dissous dans une cuve de dissolution équipée d'un dispositif de malaxage.

**10.** Procédé selon la revendication 8 ou 9, dans lequel le malaxage et/ou la dissolution d'au moins la poly(vinylpyrrolidone) est réalisée dans une atmosphère d'azote.

**11.** Procédé selon l'une quelconque des revendications 8 à 10, dans lequel la dissolution est réalisée dans des conditions **caractérisées par** un nombre de Froude de 0,7 à 1,3 et un nombre de Reynolds de 50 à 250.

**12.** Procédé selon l'une quelconque des revendications 7 à 11, comprenant l'étape consistant à sécher le faisceau de membranes en fibres creuses en irradiant ce même faisceau avec des micro-ondes sous pression réduite.

**13.** Procédé selon la revendication 12, dans lequel ledit séchage est réalisé en irradiant le faisceau de membranes en fibres creuses avec des micro-ondes ayant une faible puissance inférieure ou égale à 20 kW sous une pression réduite de 0,1 à 20 kPa.

**14.** Procédé selon la revendication 12 ou 13, dans lequel ledit séchage est réalisé tandis que la puissance des micro-ondes est progressivement réduite en fonction de la diminution de la teneur en humidité du faisceau de membranes en fibres creuses.

**15.** Procédé selon l'une quelconque des revendications 7 à 14, comprenant l'étape consistant à soumettre, à un traitement de réticulation, un faisceau de membranes en fibres creuses qui présente une concentration de peroxyde d'hydrogène inférieure ou égale à 3 ppm dans chacun des éluats des 10 parties en lesquelles le faisceau de membranes en fibres creuses se divise dans le sens de la longueur, lorsque chacune desdites parties est soumise à un essai d'élution défini dans la Norme d'approbation s'appliquant aux appareils de rein artificiel de type dialyse.

**16.** Purificateur sanguin chargé d'un faisceau de membranes en fibres creuses permsélectives à base de polysulfone comme défini dans une quelconque des revendications 1 à 6.

**17.** Purificateur sanguin selon la revendication 16, dans lequel, lorsque ledit purificateur sanguin est soumis à un essai d'élution défini dans la Norme d'approbation s'appliquant aux appareils de rein artificiel de type dialyse, après avoir été conservé à température ambiante pendant un an, la valeur maximale de l'absorbance UV d'un éluat issu de celui-ci à une longueur d'onde de 220 à 350 nm est inférieure ou égale à 0,10.

Fig. 1

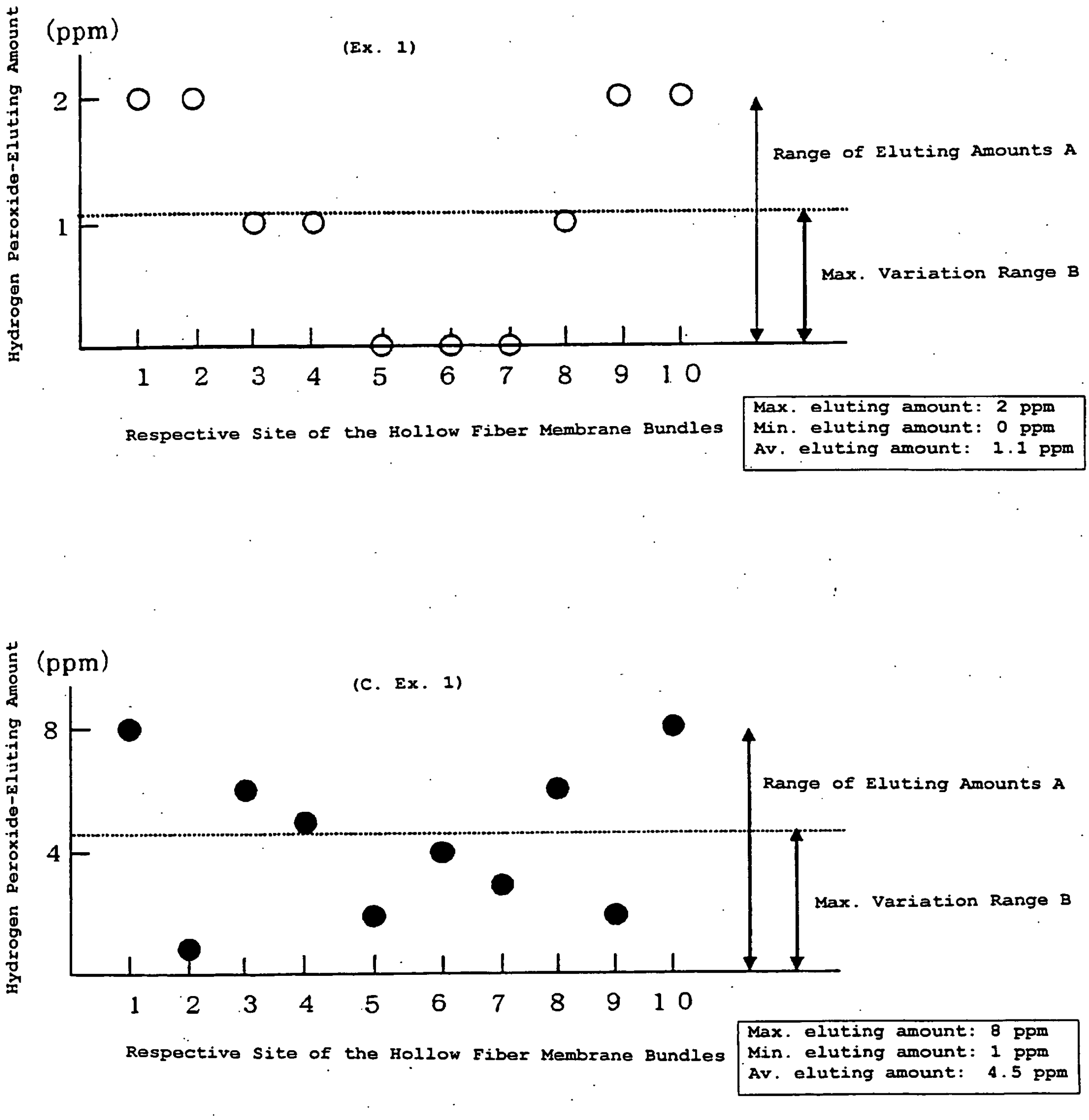
(ppm)
(Ex. 1)
Hydrogen Peroxide-Eluting Amount
2
1
1 2 3 4 5 6 7 8 9 10
Range of Eluting Amounts A
Max. Variation Range B
Respective Site of the Hollow Fiber Membrane Bundles
Max. eluting amount: 2 ppm
Min. eluting amount: 0 ppm
Av. eluting amount: 1.1 ppm
(ppm)
(C. Ex. 1)
Hydrogen Peroxide-Eluting Amount
8
4
1 2 3 4 5 6 7 8 9 10
Range of Eluting Amounts A
Max. Variation Range B
Respective Site of the Hollow Fiber Membrane Bundles
Max. eluting amount: 8 ppm
Min. eluting amount: 1 ppm
Av. eluting amount: 4.5 ppm

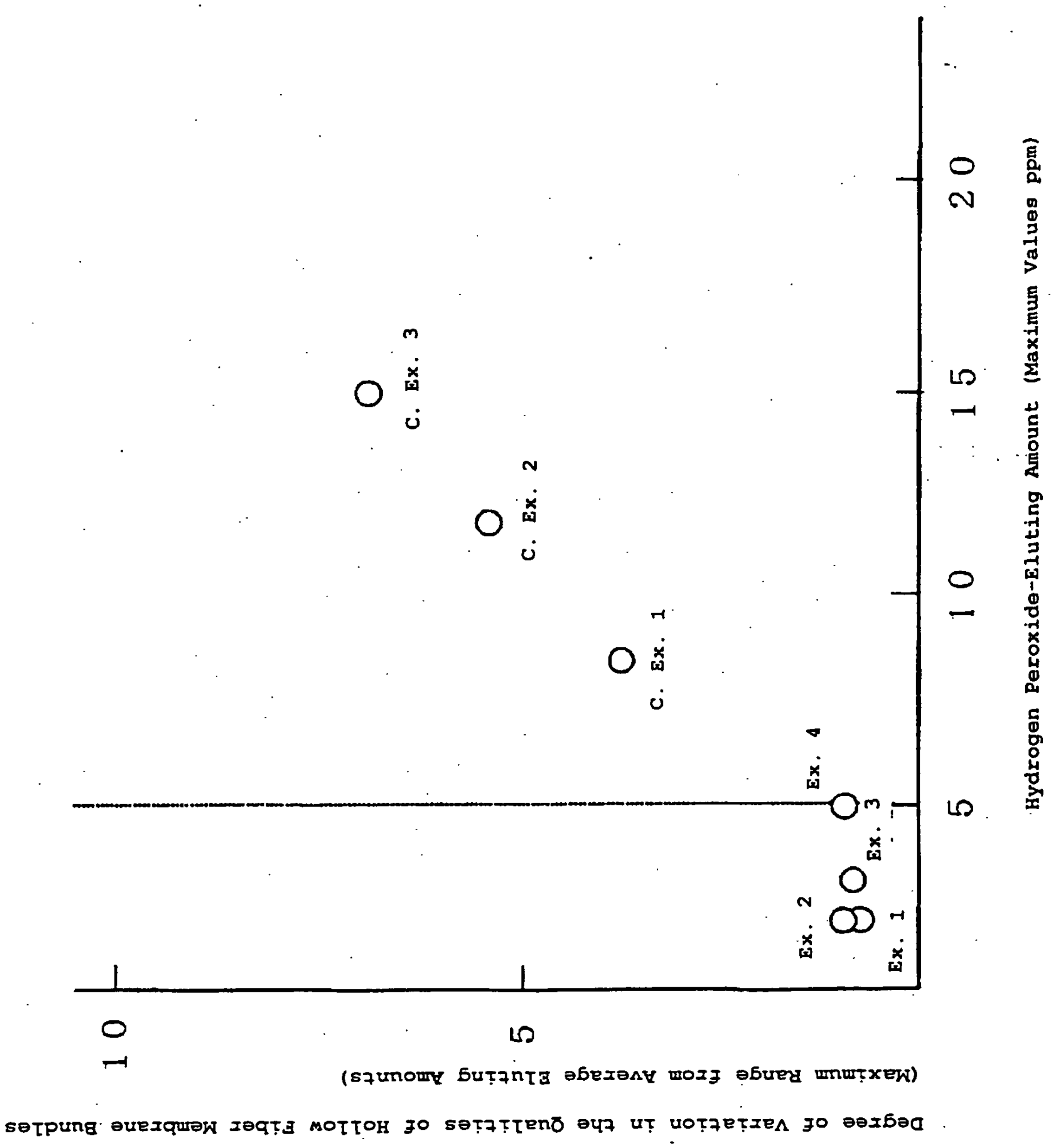
Hydrogen Peroxide-Eluting Amount (Maximum Values ppm)
5
10
15
20
Degree of Variation in the Qualities of Hollow Fiber Membrane Bundles
(Maximum Range from Average Eluting Amounts)
5
10
Ex. 1
Ex. 2
Ex. 3
Ex. 4
C. Ex. 1
C. Ex. 2
C. Ex. 3

Fig. 2

Fig. 3

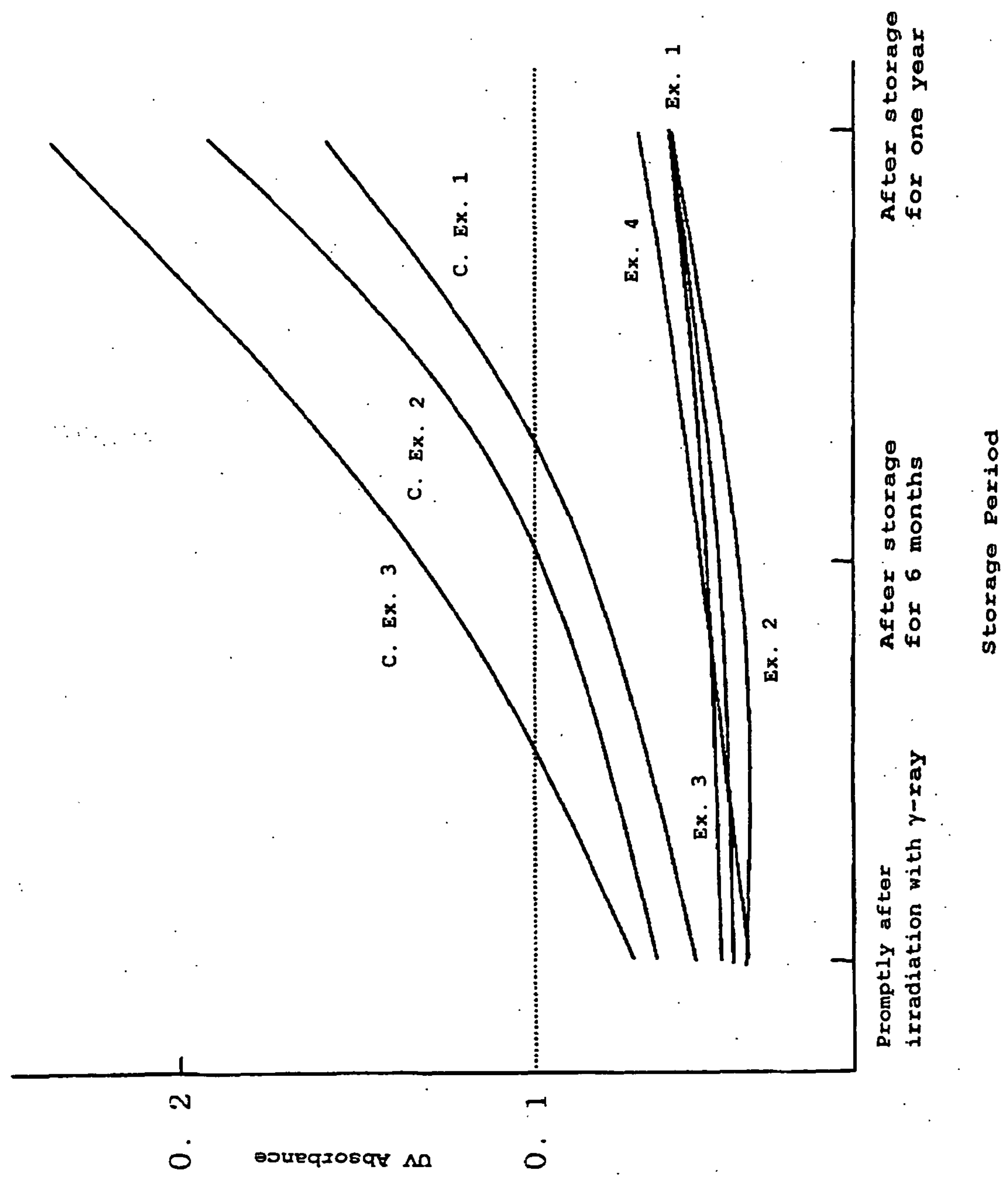
0. 2
0. 1
UV Absorbance
C. Ex. 1
C. Ex. 2
C. Ex. 3
Ex. 1
Ex. 2
Ex. 3
Ex. 4
Promptly after irradiation with γ-ray
After storage for 6 months
After storage for one year
Storage Period

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004085799 A
- JP 232860 A
- JP 58114702 A
- JP 5054373 B
- JP 6075667 B
- JP 3314861 B
- JP 6165926 A
- JP 2000350926 A
- JP 2001170171 A
- JP 6339620 A
- JP 9070524 A
- JP 9070525 A
- JP 9070526 A
- JP 9103664 A
- JP 10066864 A
- JP 10230148 A
- JP 2001170167 A
- JP 2003201383 A
- JP 2003245526 A
- JP 3474205 B
- JP 2003175320 A
- JP 2003175321 A
- JP 2003175322 A
- JP 2000300663 A
- JP 2000340356 A